# EUROPEAN PATENT APPLICATION

(11) **EP 4 542 933 A1**
(43) Date of publication of application: **23.04.2025**
(21) Application number: 24203445.2
(22) Date of filing: 30.09.2024
(51) Int. Cl.: H04L 12/18, H04L 67/104, H04L 67/12, H04L 67/55, H04L 67/562

(54) **PUBLISH-SUBSCRIBE BASED ON SEPARATION OF CONTROL AND DATA FUNCTIONS**

(30) Priority: 20.10.2023 FI 20236169
(71) Applicant: Nokia Solutions and Networks Oy, 02610 Espoo (FI)
(72) Inventor: MUKHERJEE, Sarit, Murray Hill - NJ (US); CHANG, Hyunseok, Holmdel - NJ (US); HAO, Fang, Morganville - NJ (US); HÄTÖNEN, Kimmo Kalervo, Helsinki (FI); LAKSHMAN, TV, Morganville - NJ (US)
(74) Representative: Nokia EPO representatives

(57) **Abstract**

Various example embodiments for supporting publish-subscribe (pub-sub) systems are presented. Various example embodiments for supporting pub-sub systems may be configured to support communications between pub-sub clients of pub-sub systems based on separation of control plane functions and data plane functions of legacy pub-sub brokers which typically facilitate establishment and use of pub-sub sessions by pub-sub clients. Various example embodiments for supporting pub-sub systems may be configured to support communications between pub-sub clients of pub-sub systems based on separation of the control plane functions and the data plane functions of a legacy pub-sub broker into individual logical entities in the form of a control function (CF) and a data function (DF), respectively. Various example embodiments for supporting pub-sub systems may be configured to support communications of a pub-sub client of a pub-sub system based on appropriate DF selection at pub-sub session setup and DF reselection within the active pub-sub session as conditions change.

## Description

### TECHNICAL FIELD

Various example embodiments relate generally to communication systems and, more particularly but not exclusively, to supporting a publish-subscribe paradigm in communication systems.

### BACKGROUND

Various communications technologies may be used to support communications in various types of communication systems.

### SUMMARY

In at least some example embodiments, an apparatus includes at least one processor and at least one memory including instructions which, when executed by the at least one processor, cause the apparatus at least to send, toward a control function, a request to establish a publish-subscribe control session between a publish-subscribe client and the control function, receive, based on the publish-subscribe control session, a response identifying a data function to be used by the publish-subscribe client for a publish-subscribe data session, and send, toward the data function, a request to establish the publish-subscribe data session between the publish-subscribe client and the data function. In at least some example embodiments, the request to establish the publish-subscribe control session is sent over a connection between the publish-subscribe client and the control function and using a message of a publish-subscribe protocol. In at least some example embodiments, the request to establish the publish-subscribe control session includes a parameter specified for the publish-subscribe data session, and the data function is selected from a set of available data functions based on the parameter specified for the publish-subscribe data session. In at least some example embodiments, the parameter specified for the publish-subscribe data session includes at least one of a content type of content to be communicated on the publish-subscribe data session, a client type of the publish-subscribe client, or a location of the publish-subscribe client. In at least some example embodiments, the request to establish the publish-subscribe data session is sent over a connection between the publish-subscribe client and the data function and using a message of a publish-subscribe protocol. In at least some example embodiments, the instructions, when executed by the at least one processor, cause the apparatus at least to send, toward the data function based on the publish-subscribe data session, a request to publish content or a request to subscribe to content. In at least some example embodiments, the instructions, when executed by the at least one processor, cause the apparatus at least to receive a message identifying a second data function to be used by the publish-subscribe client for the publish-subscribe data session and send, toward the second data function, a request to establish the publish-subscribe data session between the publish-subscribe client and the second data function. In at least some example embodiments, the message identifying the second data function is received via the publish-subscribe control session. In at least some example embodiments, the message identifying the second data function is received via the publish-subscribe data session.

In at least some example embodiments, a non-transitory computer-readable medium stores computer program instructions which, when executed by an apparatus, cause the apparatus at least to send, toward a control function, a request to establish a publish-subscribe control session between a publish-subscribe client and the control function, receive, based on the publish-subscribe control session, a response identifying a data function to be used by the publish-subscribe client for a publish-subscribe data session, and send, toward the data function, a request to establish the publish-subscribe data session between the publish-subscribe client and the data function. In at least some example embodiments, the request to establish the publish-subscribe control session is sent over a connection between the publish-subscribe client and the control function and using a message of a publish-subscribe protocol. In at least some example embodiments, the request to establish the publish-subscribe control session includes a parameter specified for the publish-subscribe data session, and the data function is selected from a set of available data functions based on the parameter specified for the publish-subscribe data session. In at least some example embodiments, the parameter specified for the publish-subscribe data session includes at least one of a content type of content to be communicated on the publish-subscribe data session, a client type of the publish-subscribe client, or a location of the publish-subscribe client. In at least some example embodiments, the request to establish the publish-subscribe data session is sent over a connection between the publish-subscribe client and the data function and using a message of a publish-subscribe protocol. In at least some example embodiments, the computer program instructions, when executed by the apparatus, cause the apparatus at least to send, toward the data function based on the publish-subscribe data session, a request to publish content or a request to subscribe to content. In at least some example embodiments, the computer program instructions, when executed by the apparatus, cause the apparatus at least to receive a message identifying a second data function to be used by the publish-subscribe client for the publish-subscribe data session and send, toward the second data function, a request to establish the publish-subscribe data session between the publish-subscribe client and the second data function. In at least some example embodiments, the message identifying the second data function is received via the publish-subscribe control session. In at least some example embodiments, the message identifying the second data function is received via the publish-subscribe data session.

In at least some example embodiments, a method includes sending, toward a control function, a request to establish a publish-subscribe control session between a publish-subscribe client and the control function, receiving, based on the publish-subscribe control session, a response identifying a data function to be used by the publish-subscribe client for a publish-subscribe data session, and sending, toward the data function, a request to establish the publish-subscribe data session between the publish-subscribe client and the data function. In at least some example embodiments, the request to establish the publish-subscribe control session is sent over a connection between the publish-subscribe client and the control function and using a message of a publish-subscribe protocol. In at least some example embodiments, the request to establish the publish-subscribe control session includes a parameter specified for the publish-subscribe data session, and the data function is selected from a set of available data functions based on the parameter specified for the publish-subscribe data session. In at least some example embodiments, the parameter specified for the publish-subscribe data session includes at least one of a content type of content to be communicated on the publish-subscribe data session, a client type of the publish-subscribe client, or a location of the publish-subscribe client. In at least some example embodiments, the request to establish the publish-subscribe data session is sent over a connection between the publish-subscribe client and the data function and using a message of a publish-subscribe protocol. In at least some example embodiments, the method includes sending, toward the data function based on the publish-subscribe data session, a request to publish content or a request to subscribe to content. In at least some example embodiments, the method includes receiving a message identifying a second data function to be used by the publish-subscribe client for the publish-subscribe data session and sending, toward the second data function, a request to establish the publish-subscribe data session between the publish-subscribe client and the second data function. In at least some example embodiments, the message identifying the second data function is received via the publish-subscribe control session. In at least some example embodiments, the message identifying the second data function is received via the publish-subscribe data session.

In at least some example embodiments, an apparatus includes means for sending, toward a control function, a request to establish a publish-subscribe control session between a publish-subscribe client and the control function, means for receiving, based on the publish-subscribe control session, a response identifying a data function to be used by the publish-subscribe client for a publish-subscribe data session, and means for sending, toward the data function, a request to establish the publish-subscribe data session between the publish-subscribe client and the data function. In at least some example embodiments, the request to establish the publish-subscribe control session is sent over a connection between the publish-subscribe client and the control function and using a message of a publish-subscribe protocol. In at least some example embodiments, the request to establish the publish-subscribe control session includes a parameter specified for the publish-subscribe data session, and the data function is selected from a set of available data functions based on the parameter specified for the publish-subscribe data session. In at least some example embodiments, the parameter specified for the publish-subscribe data session includes at least one of a content type of content to be communicated on the publish-subscribe data session, a client type of the publish-subscribe client, or a location of the publish-subscribe client. In at least some example embodiments, the request to establish the publish-subscribe data session is sent over a connection between the publish-subscribe client and the data function and using a message of a publish-subscribe protocol. In at least some example embodiments, the apparatus includes means for sending, toward the data function based on the publish-subscribe data session, a request to publish content or a request to subscribe to content. In at least some example embodiments, the apparatus includes means for receiving a message identifying a second data function to be used by the publish-subscribe client for the publish-subscribe data session and sending, toward the second data function, a request to establish the publish-subscribe data session between the publish-subscribe client and the second data function. In at least some example embodiments, the message identifying the second data function is received via the publish-subscribe control session. In at least some example embodiments, the message identifying the second data function is received via the publish-subscribe data session.

In at least some example embodiments, an apparatus includes at least one processor and at least one memory including instructions which, when executed by the at least one processor, cause the apparatus at least to receive, from a publish-subscribe client, a request to establish a publish-subscribe control session between the publish-subscribe client and a control function, select, based on the request to establish the publish-subscribe control session between the publish-subscribe client and the control function, a data function to be used by the publish-subscribe client for a publish-subscribe data session between the publish-subscribe client and the data function, and send, toward the publish-subscribe client based on the publish-subscribe control session, a message identifying the data function to be used by the publish-subscribe client for the publish-subscribe data session between the publish-subscribe client and the data function. In at least some example embodiments, the request to establish the publish-subscribe control session between the publish-subscribe client and the control function includes a parameter specified for the publish-subscribe data session, and the data function is selected from a set of available data functions based on the parameter specified for the publish-subscribe data session. In at least some example embodiments, the parameter specified for the publish-subscribe data session includes at least one of a content type of content to be communicated on the publish-subscribe data session, a client type of the publish-subscribe client, or a location of the publish-subscribe client. In at least some example embodiments, the instructions, when executed by the at least one processor, cause the apparatus at least to select a second data function to be used by the publish-subscribe client for the publish-subscribe data session between the publish-subscribe client and the data function and send, toward the publish-subscribe client, a message identifying the second data function to be used by the publish-subscribe client for the publish-subscribe data session between the publish-subscribe client and the second data function. In at least some example embodiments, the message identifying the second data function is sent via the publish-subscribe control session. In at least some example embodiments, the message identifying the second data function is sent toward the data function for delivery via the publish-subscribe data session.

In at least some example embodiments, a non-transitory computer-readable medium stores computer program instructions which, when executed by an apparatus, cause the apparatus at least to receive, from a publish-subscribe client, a request to establish a publish-subscribe control session between the publish-subscribe client and a control function, select, based on the request to establish the publish-subscribe control session between the publish-subscribe client and the control function, a data function to be used by the publish-subscribe client for a publish-subscribe data session between the publish-subscribe client and the data function, and send, toward the publish-subscribe client based on the publish-subscribe control session, a message identifying the data function to be used by the publish-subscribe client for the publish-subscribe data session between the publish-subscribe client and the data function. In at least some example embodiments, the request to establish the publish-subscribe control session between the publish-subscribe client and the control function includes a parameter specified for the publish-subscribe data session, and the data function is selected from a set of available data functions based on the parameter specified for the publish-subscribe data session. In at least some example embodiments, the parameter specified for the publish-subscribe data session includes at least one of a content type of content to be communicated on the publish-subscribe data session, a client type of the publish-subscribe client, or a location of the publish-subscribe client. In at least some example embodiments, the computer program instructions, when executed by the apparatus, cause the apparatus at least to select a second data function to be used by the publish-subscribe client for the publish-subscribe data session between the publish-subscribe client and the data function and send, toward the publish-subscribe client, a message identifying the second data function to be used by the publish-subscribe client for the publish-subscribe data session between the publish-subscribe client and the second data function. In at least some example embodiments, the message identifying the second data function is sent via the publish-subscribe control session. In at least some example embodiments, the message identifying the second data function is sent toward the data function for delivery via the publish-subscribe data session.

In at least some example embodiments, a method includes receiving, from a publish-subscribe client, a request to establish a publish-subscribe control session between the publish-subscribe client and a control function, selecting, based on the request to establish the publish-subscribe control session between the publish-subscribe client and the control function, a data function to be used by the publish-subscribe client for a publish-subscribe data session between the publish-subscribe client and the data function, and sending, toward the publish-subscribe client based on the publish-subscribe control session, a message identifying the data function to be used by the publish-subscribe client for the publish-subscribe data session between the publish-subscribe client and the data function. In at least some example embodiments, the request to establish the publish-subscribe control session between the publish-subscribe client and the control function includes a parameter specified for the publish-subscribe data session, and the data function is selected from a set of available data functions based on the parameter specified for the publish-subscribe data session. In at least some example embodiments, the parameter specified for the publish-subscribe data session includes at least one of a content type of content to be communicated on the publish-subscribe data session, a client type of the publish-subscribe client, or a location of the publish-subscribe client. In at least some example embodiments, the method includes selecting a second data function to be used by the publish-subscribe client for the publish-subscribe data session between the publish-subscribe client and the data function and send, toward the publish-subscribe client, a message identifying the second data function to be used by the publish-subscribe client for the publish-subscribe data session between the publish-subscribe client and the second data function. In at least some example embodiments, the message identifying the second data function is sent via the publish-subscribe control session. In at least some example embodiments, the message identifying the second data function is sent toward the data function for delivery via the publish-subscribe data session.

In at least some example embodiments, an apparatus includes means for receiving, from a publish-subscribe client, a request to establish a publish-subscribe control session between the publish-subscribe client and a control function, means for selecting, based on the request to establish the publish-subscribe control session between the publish-subscribe client and the control function, a data function to be used by the publish-subscribe client for a publish-subscribe data session between the publish-subscribe client and the data function, and means for sending, toward the publish-subscribe client based on the publish-subscribe control session, a message identifying the data function to be used by the publish-subscribe client for the publish-subscribe data session between the publish-subscribe client and the data function. In at least some example embodiments, the request to establish the publish-subscribe control session between the publish-subscribe client and the control function includes a parameter specified for the publish-subscribe data session, and the data function is selected from a set of available data functions based on the parameter specified for the publish-subscribe data session. In at least some example embodiments, the parameter specified for the publish-subscribe data session includes at least one of a content type of content to be communicated on the publish-subscribe data session, a client type of the publish-subscribe client, or a location of the publish-subscribe client. In at least some example embodiments, the apparatus includes means for selecting a second data function to be used by the publish-subscribe client for the publish-subscribe data session between the publish-subscribe client and the data function and send, toward the publish-subscribe client, a message identifying the second data function to be used by the publish-subscribe client for the publish-subscribe data session between the publish-subscribe client and the second data function. In at least some example embodiments, the message identifying the second data function is sent via the publish-subscribe control session. In at least some example embodiments, the message identifying the second data function is sent toward the data function for delivery via the publish-subscribe data session.

In at least some example embodiments, an apparatus includes at least one processor and at least one memory including instructions which, when executed by the at least one processor, cause the apparatus at least to maintain a publish-subscribe data session between a publish-subscribe client and a data function, receive, from the control function, a message including an indication of a second data function to be used by the publish-subscribe client for the publish-subscribe data session, send, toward the publish-subscribe client via the publish-subscribe data session, the message including the indication of the second data function to be used by the publish-subscribe client for the publish-subscribe data session, and receive, from the publish-subscribe client, a request to terminate the publish-subscribe data session between the publish-subscribe client and the data function. In at least some example embodiments, a non-transitory computer-readable medium stores computer program instructions which, when executed by an apparatus, cause the apparatus at least to maintain a publish-subscribe data session between a publish-subscribe client and a data function, receive, from the control function, a message including an indication of a second data function to be used by the publish-subscribe client for the publish-subscribe data session, send, toward the publish-subscribe client via the publish-subscribe data session, the message including the indication of the second data function to be used by the publish-subscribe client for the publish-subscribe data session, and receive, from the publish-subscribe client, a request to terminate the publish-subscribe data session between the publish-subscribe client and the data function. In at least some example embodiments, a method includes maintaining a publish-subscribe data session between a publish-subscribe client and a data function, receiving, from the control function, a message including an indication of a second data function to be used by the publish-subscribe client for the publish-subscribe data session, sending, toward the publish-subscribe client via the publish-subscribe data session, the message including the indication of the second data function to be used by the publish-subscribe client for the publish-subscribe data session, and receiving, from the publish-subscribe client, a request to terminate the publish-subscribe data session between the publish-subscribe client and the data function. In at least some example embodiments, an apparatus includes means for maintaining a publish-subscribe data session between a publish-subscribe client and a data function, means for receiving, from the control function, a message including an indication of a second data function to be used by the publish-subscribe client for the publish-subscribe data session, means for sending, toward the publish-subscribe client via the publish-subscribe data session, the message including the indication of the second data function to be used by the publish-subscribe client for the publish-subscribe data session, and means for receiving, from the publish-subscribe client, a request to terminate the publish-subscribe data session between the publish-subscribe client and the data function.

### BRIEF DESCRIPTION OF THE DRAWINGS

The teachings herein can be readily understood by considering the following detailed description in conjunction with the accompanying drawings, in which:
FIG. 1 depicts an example embodiment of a publish-subscribe (pub-sub) architecture for pub-sub clients that is based on logical separation of a pub-sub control function and a pub-sub data function to support pub-sub communications by the pub-sub clients;
FIG. 2 depicts an example embodiment for use of the pub-sub architecture of FIG. 1 to provide a service selection function that performs initial data function selection for a pub-sub client to support a pub-sub data session of the pub-sub client;
FIG. 3 depicts an example embodiment of a method for use by a pub-sub client to support the service selection function presented with respect to FIG. 2;
FIG. 4 depicts an example embodiment of a method for use by a control function to support the service selection function presented with respect to FIG. 2;
FIG. 5 depicts an example embodiment of a method for use by a data function to support the service selection function presented with respect to FIG. 2;
FIG. 6 depicts an example embodiment for use of the pub-sub architecture of FIG. 1 to provide a service migration function that performs data function migration for a pub-sub client to change the data function being used during a pub-sub data session of the pub-sub client;
FIG. 7 depicts an example embodiment of a method for use by a pub-sub client to support the service migration function presented with respect to FIG. 6;
FIG. 8 depicts an example embodiment of a method for use by a control function to support the service migration function presented with respect to FIG. 6;
FIG. 9 depicts an example embodiment of a method for use by a data function to support the service selection migration presented with respect to FIG. 6;
FIG. 10 depicts an example embodiment of a pub-sub system based on a pub-sub architecture including separate control functions and data functions configured to support pub-sub communications by pub-sub clients;
FIG. 11 depicts an example embodiment of a pub-sub architecture configured to provide publish-subscribe-as-a-service (PSaaS);
FIG. 12 depicts an example embodiment of use of a pub-sub system to support diversity in terms of protocol usage;
FIG. 13 depicts an example embodiment of use of a pub-sub system to support diversity in terms of content and content session types;
FIG. 14 depicts an example embodiment of use of a pub-sub system to support dynamism in client behavior;
FIG. 15 depicts an example embodiment for use of the pub-sub architecture of FIG. 11 within the context of a particular type of communication network; and
FIG. 16 depicts an example embodiment of a computer suitable for use in performing various functions presented herein.

To facilitate understanding, identical reference numerals have been used herein, wherever possible, in order to designate identical elements that are common among the various figures.

### DETAILED DESCRIPTION

Various example embodiments for supporting publish-subscribe (pub-sub) systems are presented herein. In general, pub-sub is a paradigm for content distribution that supports distribution of content from one or more producers of the content (typically referred to as content publishers or, more generally, publishers) to one or more consumers of the content (typically referred to as content subscribers or, more generally, subscribers) using pub-sub sessions supporting delivery of the content from the producers to the consumers. A pub-sub system may support one-to-many distribution (e.g., distribution of content from one producer to many consumers), many-to-one distribution (e.g., distribution of content from many producers to one consumer), or many-to-many distribution (e.g., distribution of content from many producers to many consumers). It will be appreciated that the content producers (publishers) and content consumers (subscribers) may be referred to more generally as pub-sub clients (i.e., clients of the pub-sub system) when the roles in which they are operating are not necessarily relevant to the context. Various example embodiments for supporting pub-sub systems may be configured to support communications between pub-sub clients of pub-sub systems.

Various example embodiments for supporting pub-sub systems may be configured to support communications between pub-sub clients of pub-sub systems based on separation of control plane functions and data plane functions of legacy pub-sub brokers which typically facilitate establishment and use of pub-sub sessions by pub-sub clients. Various example embodiments for supporting pub-sub systems may be configured to support communications between pub-sub clients of pub-sub systems based on separation of the control plane functions and the data plane functions of a legacy pub-sub broker into individual logical entities in the form of a control function (CF) and a data function (DF), respectively. Various example embodiments for supporting pub-sub systems may be configured to support communications of a pub-sub client of a pub-sub system based on extension of a pub-sub client interface of the pub-sub client to support interaction by the pub-sub client with the CF using a pub-sub control session and with the DF using a pub-sub data session. Various example embodiments for supporting pub-sub systems may be configured to support communications of a pub-sub client of a pub-sub system based on extension of the pub-sub client interface of the pub-sub client to allow for appropriate DF selection at pub-sub session setup and to allow for subsequent DF reselection within the active pub-sub session as conditions change (e.g., pub-sub client needs, pub-sub client locations, content types, network conditions, or the like, as well as various combinations thereof).

Various example embodiments for supporting pub-sub systems may be configured to provide pub-sub architectures that support massive scale (e.g., handling a large number of pub-sub clients), immense dynamism (e.g., dynamism in terms of the numbers of pub-sub clients in the pub-sub system, dynamism in terms of the locations from which the pub-sub clients join the pub-sub system (including movements relative to the network), dynamism in terms of the length of time for which the pub-sub clients remain active within the pub-sub system (e.g., relatively long or short durations, widely variable durations, and so forth), or the like, as well as various combinations thereof), and extreme diversity (e.g., diversity in terms of the types of content being delivered, diversity in terms of the protocols being used for content delivery, diversity in terms of traffic characteristics of traffic transporting content, diversity in terms of fan-out characteristics of various groups of pub-sub clients within the pub-sub system (e.g., unicast versus multicast), and so forth). Various example embodiments for supporting pub-sub systems may be configured to provide pub-sub architectures supporting publish-subscribe-as-a-service (PSaaS).

Various example embodiments for supporting pub-sub systems may be configured to support communications between pub-sub clients of pub-sub systems in various communication contexts. For example, various example embodiments for supporting pub-sub systems may be configured to support communications between pub-sub clients of pub-sub systems which have been implemented to support communications of service provider networks (e.g., supporting communications in cellular communication networks, such as in Fifth Generation (5G) networks and Sixth Generation (6G) cellular networks, or various other types of service provider communication networks), communications for Industrial Internet contexts (e.g., Industrial Internet of Things (IIoT) or other Industrial Internet applications which may be used for manufacturing management, energy management, or the like), communications in massive sensing contexts (e.g., asset management, inventory optimization, health monitoring, wearable connectivity, control of smart environments, or the like), or the like, as well as various combinations thereof.

It will be appreciated that these and various other example embodiments for supporting pub-sub systems, and advantages or potential advantages of example embodiments for supporting pub-sub systems, may be further understood by first considering various aspects of the publish-subscribe paradigm and various contexts within which the publish-subscribe paradigm may be deployed.

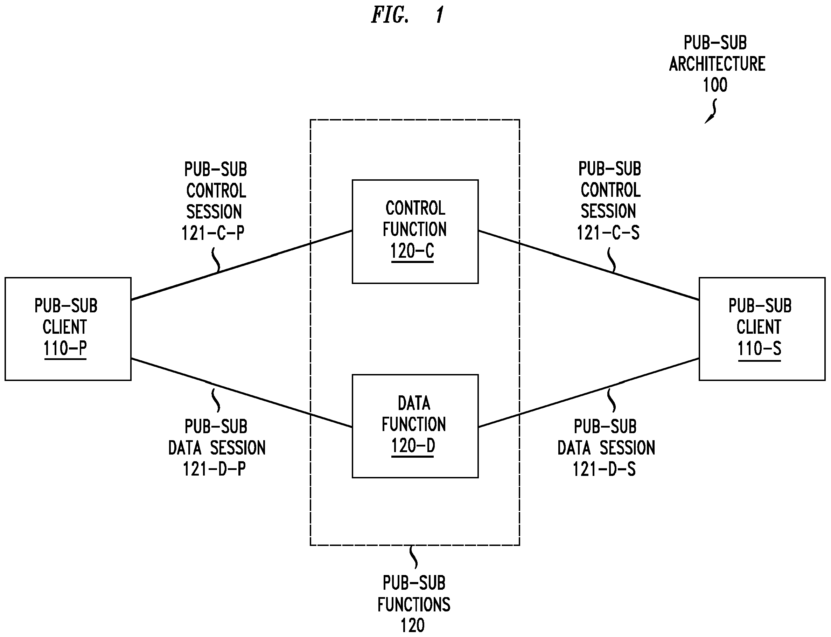

FIG. 1 depicts an example embodiment of a publish-subscribe (pub-sub) architecture that is based on logical separation of a pub-sub control plane function and a pub-sub data plane function to support pub-sub communications by pub-sub clients.

The pub-sub architecture 100 is configured for use to provide a pub-sub system supporting propagation of content from content producers to content consumers. The pub-sub architecture 100 includes a pair of pub-sub clients 110 (illustratively, a publisher pub-sub client 110-P configured to operate as a content producer for the pub-sub system and a subscriber pub-sub client 110-S configured to operate as a content consumer for the pub-sub system) and a pair of pub-sub functions 120 (illustratively, a control function (CF) 120-C and a data function (DF) 120-D). It will be appreciated that the pub-sub architecture 100 may be used to provide a pub-sub system supporting propagation of content from content producers to content consumers in various contexts in which pub-sub systems may be used (e.g., communication service provider networks, Industrial Internet, massive sensing, or the like, as well as various combinations thereof).

The pub-sub clients 110 are configured to participate in a pub-sub system for supporting communication of pub-sub content from the producer of the pub-sub content (e.g., the publisher pub-sub client 110-P) to the consumer of the pub-sub content (e.g., the subscriber pub-sub client 110-S). The pub-sub clients 110 may include various types of clients which may operate within a pub-sub system, which may vary for different contexts in which the pub-sub system may be deployed. For example, the pub-sub clients 110 may include network functions (NFs) where the pub-sub system is used within the context of a service provider network (e.g., NFs of a Fifth Generation (5G) cellular network, NFs of a Sixth Generation (6G) cellular network, or the like). For example, the pub-sub clients 110 may include a field instrument and a workstation where the pub-sub system is used within the context of an Industrial Internet environment. For example, the pub-sub clients 110 may include a sensor and a controller where the pub-sub system is used within the context of a massive sensing environment. It will be appreciated that the pub-sub clients 110 may include various other types of endpoints depending on the context in which the pub-sub system is deployed.

The pub-sub functions 120 are configured to support communication of pub-sub content from the publisher pub-sub client 110-P to the subscriber pub-sub client 1 10-S, including establishment and use of pub-sub sessions which may be used to support communication of pub-sub content from the publisher pub-sub client 110-P to the subscriber pub-sub client 110-S. The pub-sub functions 120 are logically separated such that each of the pub-sub clients 110 communicates with each of the CF 120-C and the DF 120-D independently using separate pub-sub sessions, respectively, as opposed to the case of a legacy pub-sub broker in which the pub-sub control functions and pub-sub data functions are logically combined in the legacy pub-sub broker such that each pub-sub client supports only a single pub-sub session to the legacy pub-sub broker (such that pub-sub control and data communications of a pub-sub client are constrained to be over a single pub-sub session). Namely, as illustrated in FIG. 1, based on the separation of the control plane functions and data plane functions in the form of the CF 120-C and the DF 120-D, the pub-sub clients 110-P and 110-S support respective pub-sub control sessions 121-C-P and 121-C-S (referred to collectively as pub-sub control sessions 121-C) to the CF 120-C and support respective pub-sub data sessions 121-D-P and 121-D-S (referred to collectively as pub-sub data sessions 121-D) to the DF 120-D, and the pub-sub control sessions 121-C and the pub-sub data sessions 121-D may be referred to collectively herein as pub-sub sessions 121).

The CF 120-C is configured to support establishment and management of pub-sub sessions 121 for the pub-sub clients 110. The CF 120-C is configured to support management of various events associated with establishment and management of pub-sub sessions for the pub-sub clients 110 (e.g., pub-sub client joins/leaves, pub-sub client authentication, or the like). The CF 120-C is configured to support configuration of the DF 120-D for dissemination of pub-sub content (e.g., exchange creation/deletion, queue binding/unbinding, or the like). It will be appreciated that the CF 120-C may be configured to support various other functions typically provided by a control plane of a legacy pub-sub broker in a pub-sub system. The CF 120-C is configured to support establishment of the pub-sub control sessions 121-C with the pub-sub clients 110 (illustratively, the control connection 121-C-P for the pub-sub client 110-P and the control connection 121-C-S for the pub-sub client 110-S) for purposes of supporting establishment and management of pub-sub data sessions 121-D for use by the pub-sub clients 110 to support communication of pub-sub content in a pub-sub system.

The DF 120-D is configured to support establishment and use of pub-sub data sessions 121-D used for communications between the pub-sub clients 110, including supporting propagation of pub-sub content between the pub-sub clients 110 via pub-sub sessions. The DF 120-D is configured to provide various functions for supporting propagation of pub-sub content between the pub-sub clients 110 via pub-sub sessions (e.g., data ingress/egress, data buffering, data filtering, and so forth). It will be appreciated that the DF 120-D may be configured to support various other functions typically provided by a data plane of a legacy pub-sub broker in a pub-sub system. The DF 120-D is configured to support establishment of the pub-sub data sessions 121-D with the pub-sub clients 110 (illustratively, the pub-sub data session 121-D-P for the pub-sub client 110-P and the pub-sub data session 121-D-S for the pub-sub client 110-S) for use by the pub-sub clients 110 to support communication of pub-sub content in a pub-sub system.

The pub-sub sessions 121 between the pub-sub clients 110 and the pub-sub functions 120 may be provided in various ways. As discussed further below, for example, the pub-sub sessions 121 of the pub-sub clients 110 may operate at the pub-sub layer based on one or more pub-sub protocols and be supported based on underlying connections which may be based on various communication protocols which may operate at various communication layers.

The pub-sub sessions 121 of the pub-sub clients 110, as indicated above, may operate at the pub-sub layer based on one or more pub-sub protocols. For example, one or more pub-sub protocols may be used for establishment of the pub-sub sessions 121 of the pub-sub clients 110 and for use of the pub-sub sessions 121 of the pub-sub clients 110 to transport pub-sub content between the pub-sub clients 110. For example, a pub-sub protocol may support various message types which may include message types for use in establishing and terminating the pub-sub sessions 121 of the pub-sub clients 110 (e.g., CONNECT, REDIRECT, DISCONNECT, or the like, as well as various combinations thereof, or various other types of messages which may be used for this purpose) and message types for use in exchanging pub-sub content between pub-sub clients 110 within the context of the pub-sub sessions 121 of the pub-sub clients 110. It will be appreciated that, although primarily presented with respect to example embodiments in which the pub-sub clients 110 support pub-sub protocols configured to enable separation of the legacy pub-sub broker into the CF 120-C and the DF 120-D, legacy pub-sub clients which do not support pub-sub protocols configured to enable separation of the legacy pub-sub broker into the CF 120-C and the DF 120-D may still participate in pub-sub systems based on separation of the legacy pub-sub broker into the CF 120-C and the DF 120-D based on use of a protocol converter placed between such legacy pub-sub clients and the separate functions (namely, the CF 120-C and the DF 120-D) where the protocol converter is configured to translate between legacy pub-sub protocols and pub-sub protocols configured to enable separation of the legacy pub-sub broker into the CF 120-C and the DF 120-D.

The pub-sub sessions 121 may be supported using underlying connections which may be implemented in various ways. For example, the underlying connections supporting the pub-sub sessions 121 may be implemented using various communication protocols or combinations of communication protocols (e.g., one or more reliable protocols at the transport layer, one or more reliable protocols at the session layer, or the like, as well as various combinations thereof). For example, the underlying connections supporting the pub-sub sessions 121 may be implemented as Transmission Control Protocol (TCP) connections or at least based on TCP connections, may be implemented as Hypertext Transfer Protocol (HTTP) connections or at least based on HTTP connections, or the like, as well as various combinations thereof. It will be appreciated that the connections underlying the pub-sub sessions 121 may be implemented in various other ways (e.g., using various other communication layers or combinations of communication layers, using various other communication protocols or combinations of communication protocols, or the like, as well as various combinations thereof).

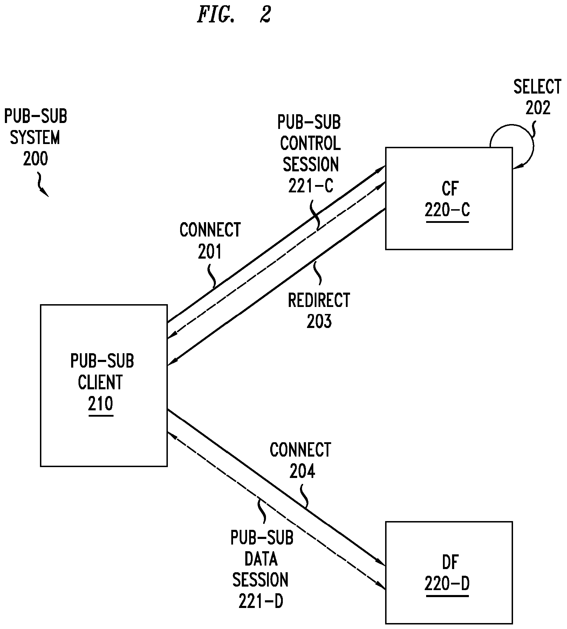

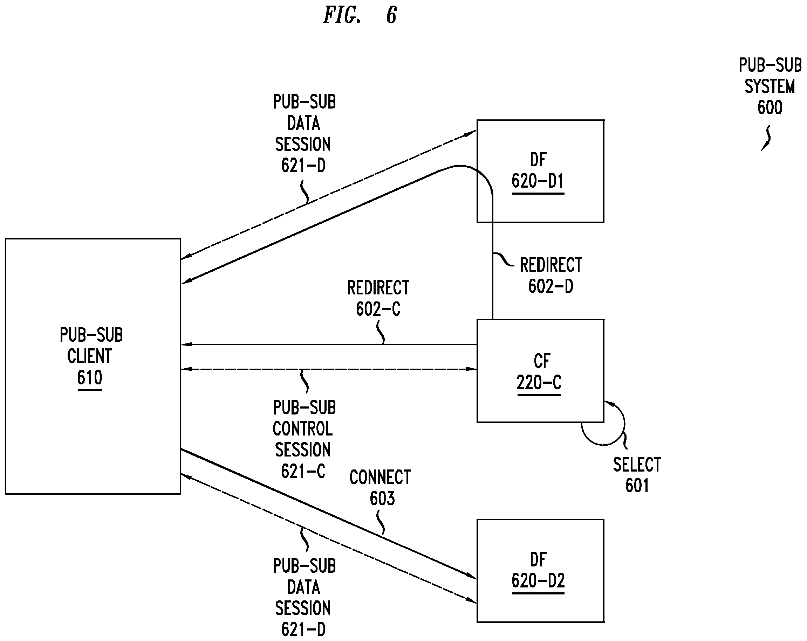

The pub-sub architecture 100 is configured to support dynamic control over association of pub-sub clients 110 with DFs for supporting pub-sub communications for the pub-sub clients 110. The pub-sub architecture 100 is configured to support dynamic DF selection for the pub-sub clients 110 (including initial DF selection based on initial conditions and subsequent DF reselection as conditions change), thereby ensuring that, at any given time, each pub-sub client 110 supports communication of pub-sub content via a pub-sub data session 121-D established with the DF 120-D that is best-suited to support the pub-sub client 110. More specifically, as discussed further herein, the pub-sub architecture 100 is configured to allow for appropriate DF selection at pub-sub session setup of a pub-sub client 110 and to allow for subsequent DF reselection within the active pub-sub session of the pub-sub client 110 as conditions change (e.g., changes in one or more of pub-sub client needs, pub-sub client locations, content types being distributed, network conditions of the underlying network supporting pub-sub content distribution, or the like, as well as various combinations thereof). The pub-sub architecture 100 is configured to support a service selection function that performs initial DF selection for a pub-sub client 110 (example embodiments of which may be further understood by way of reference to FIGs. 2 - 5) and a service migration function that performs DF migration for a pub-sub client 110 (example embodiments of which may be further understood by way of reference to FIGs. 6 - 9), the combination of which may be referred to herein as PSaaS. It will be appreciated that the pub-sub architecture 100 may be configured to support various other functions for supporting communication of pub-sub content between pub-sub clients 110 in a pub-sub system.

It will be appreciated, as discussed further below, that the pub-sub architecture 100 may be configured to support scale, dynamism, and diversity in pub-sub systems supporting content dissemination to pub-sub clients.

FIG. 2 depicts an example embodiment for use of the pub-sub architecture of FIG. 1 to provide a service selection function that performs initial data function selection for a pub-sub client to support a pub-sub data session of the pub-sub client.

As illustrated in FIG. 2, a pub-sub system 200 is supporting a service selection function in which an initial data function is selected for a pub-sub client to support a pub-sub data session of the pub-sub client. The service selection function is being performed for a pub-sub client 210 based on use of a pair of pub-sub functions 220 including a CF 220-C and a DF 220-D. It is noted that the pub-sub client 210 and the pair of pub-sub functions 220 may communicate based on a pub-sub protocol which may support various pub-sub protocol message types which may be used to support the service selection function for the pub-sub client 210.

At a first step of the service selection function, the pub-sub client 210 establishes a pub-sub control session 221-C with the CF 220-C. The pub-sub control session 221-C may be established over a connection between the pub-sub client 210 and the CF 220-C (e.g., a TCP connection, an HTTP connection, or any other suitable connection), where such connection may be established within the context of the first step. The pub-sub control session 221-C may be established by sending a message of the pub-sub protocol from the pub-sub client 210 to the CF 220-C (e.g., a CONNECT message or other suitable message of a pub-sub protocol). The message sent by the pub-sub client 210 to establish the pub-sub control session 221-C between the pub-sub client 210 and the CF 220-C may include information for use by the CF 220-C to select the DF 220-D to be the data function for the pub-sub client 210. For example, the information for use by the CF 220-C to select the DF 220-D to be the data function for the pub-sub client 210 may include one or more requirements for the pub-sub data session (e.g., a type of content to be communicated within the context of the pub-sub data session, a topic identifier under which the pub-sub client 210 publishes or consumes content, a parameter or characteristic to be supported by the pub-sub data session (e.g., high throughput, low latency, support for deterministic communications, or the like), or the like), one or more parameters associated with the pub-sub client 210 (e.g., an identifier of the pub-sub client 210, a client type of the pub-sub client 210, a capability of the pub-sub client 210, an operating parameter of the pub-sub client 210, a location of the pub-sub client (e.g., a geographic location, a network location, or the like), or the like), or the like, as well as various combinations thereof. This first step is denoted in FIG. 2 as CONNECT 201.

At a second step of the service selection function, the CF 220-C selects a DF that is to be used by the pub-sub client 210 for pub-sub communications (e.g., for providing pub-sub content where the pub-sub client 210 is a publisher or for receiving pub-sub content where the pub-sub client 210 is a subscriber). In the example of FIG. 2, the DF that is selected is the DF that is depicted (namely, DF 220-D); however, it will be appreciated that the DF 220-D is selected from a set of available DFs (which are omitted from FIG. 2 for purposes of clarity). The CF 220-C may select the DF that is to be used by the pub-sub client 210 based on the message sent by the pub-sub client 210 to establish the pub-sub control session 221-C between the pub-sub client 210 and the CF 220-C. The CF 220-C may select the DF that is to be used by the pub-sub client 210 based on information included in the message sent by the pub-sub client 210 to establish the pub-sub control session 221-C between the pub-sub client 210 (e.g., one or more requirements for the pub-sub data session (e.g., a type of content to be communicated within the context of the pub-sub data session, a parameter or characteristic to be supported by the pub-sub data session (e.g., high throughput, low latency, support for deterministic communications, or the like), or the like), one or more parameters associated with the pub-sub client 210 (e.g., an identifier of the pub-sub client 210, a client type of the pub-sub client 210, a capability of the pub-sub client 210, an operating parameter of the pub-sub client 210, a location of the pub-sub client (e.g., a geographic location, a network location, or the like), or the like), or the like, as well as various combinations thereof). The CF 220-C may select the DF that is to be used by the pub-sub client 210 based on one or more DF selection rules which may utilize various types of information to make the selection of the DF for the pub-sub client 210. The CF 220-C may select the DF that is to be used by the pub-sub client 210 based on one or more DF selection algorithms which may utilize various types of information to make the selection of the DF for the pub-sub client 210. The CF 220-C may select an optimal DF for use by the pub-sub client 210 or a suitable DF for use by the pub-sub client 210. It will be appreciated that the CF 220-C may select the DF for the pub-sub client 210 in various other ways. This second step is denoted in FIG. 2 as SELECT 202.

At a third step of the service selection function, the pub-sub client 210 receives, via the pub-sub control session 221-C between the pub-sub client 210 and the CF 220-C, an indication that the DF 220-D is to be used by the pub-sub client 210 for pub-sub communications. The indication that the DF 220-D is to be used by the pub-sub client 210 for pub-sub communications may be received by the pub-sub client 210 from the CF 220-C in a message of the pub-sub protocol (e.g., a Redirect message or other suitable message type). The message may include information identifying the DF 220-D selected by the CF 220-C for the pub-sub client 210. The message may include information which may be used by the pub-sub client 210 to establish the pub-sub data session 221-D between the pub-sub client 210 and the DF 220-D, which may vary depending on the one or more of the pub-sub protocol used for the pub-sub data session 221-D between the pub-sub client 210 and the DF 220-D, the connection type of the underlying connection that will be used to support the pub-sub data session 221-D between the pub-sub client 210 and the DF 220-D, or the like, as well as various combinations thereof. For example, the message may include an address of the DF 220-D, a uniform resource locator (URL) identifying the DF 220-D, or the like, as well as various combinations thereof. It will be appreciated that the message received by the pub-sub client 210 from the CF 220-C for the selected DF 220-D may include various other types of information identifying the DF 220-D selected by the CF 220-C for the pub-sub client 210. This third step is denoted in FIG. 2 as REDIRECT 203.

At a fourth step of the service selection function, the pub-sub client 210 establishes a pub-sub data session 221-D with the DF 220-D. The pub-sub data session 221-D may be established over a connection between the pub-sub client 210 and the DF 220-D (e.g., a TCP connection, an HTTP connection, or any other suitable connection), where such connection may be established within the context of the fourth step based on information included in the message received by the pub-sub client 210 from the CF 220-C. The pub-sub data session 221-D may be established by sending a message of the pub-sub protocol from the pub-sub client 210 to the DF 220-D (e.g., a CONNECT message or other suitable message of a pub-sub protocol). The message sent by the pub-sub client 210 to establish the pub-sub data session 221-D between the pub-sub client 210 and the DF 220-D may include information for use by the DF 220-D to support the pub-sub data session 221-D, information for use by the DF 220-D to use the pub-sub data session 221-D for communication of pub-sub content, or the like, as well as various combinations thereof. This fourth step is denoted in FIG. 2 as CONNECT 204.

In FIG. 2, the pub-client 210, after the pub-sub data session 221-D has been established between the pub-sub client 210 and the DF 220-D, may use the pub-sub data session 221-D to support communication of pub-sub content between the pub-sub client 210 and other pub-sub clients (omitted for purposes of clarity), such as by operating as a publisher and sending pub-sub content to one or more other pub-sub clients operating as subscribers and/or operating as a subscriber and receiving pub-sub content from one or more other pub-sub clients operating as publishers.

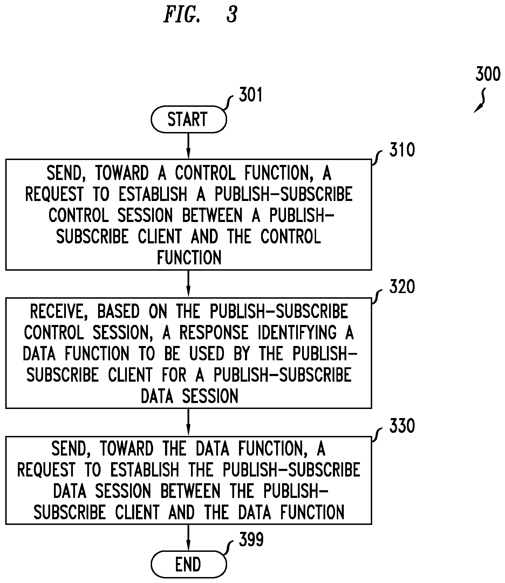

FIG. 3 depicts an example embodiment of a method for use by a pub-sub client to support the service selection function presented with respect to FIG. 2. It will be appreciated that, although primarily presented as being performed serially, at least a portion of the functions of the method 300 may be performed contemporaneously or in a different order than as presented with respect to FIG. 3. At block 301, the method 300 begins. At block 310, send, toward a control function, a request to establish a pub-sub control session between a pub-sub client and the control function. At block 320, receive, based on the pub-sub control session, a response identifying a data function to be used by the pub-sub client for a pub-sub data session. At block 330, send, toward the data function, a request to establish the pub-sub data session between the pub-sub client and the data function. At block 399, the method 300 ends. It will be appreciated that various functions presented herein with respect to FIG. 1 and FIG. 2 may be incorporated within the context of method 300 of FIG. 3.

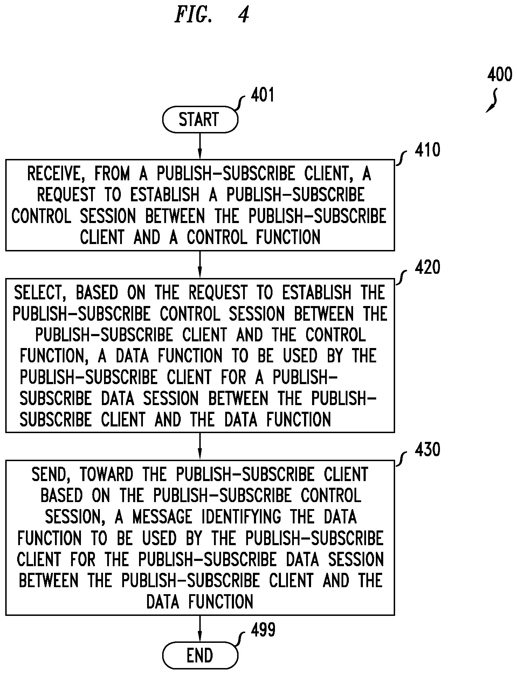

FIG. 4 depicts an example embodiment of a method for use by a control function to support the service selection function presented with respect to FIG. 2. It will be appreciated that, although primarily presented as being performed serially, at least a portion of the functions of the method 400 may be performed contemporaneously or in a different order than as presented with respect to FIG. 4. At block 401, the method 400 begins. At block 410, receive, from a pub-sub client, a request to establish a pub-sub control session between the pub-sub client and a control function. At block 420, select, based on the request to establish the pub-sub control session between the pub-sub client and the control function, a data function to be used by the pub-sub client for a pub-sub data session between the pub-sub client and the data function. At block 430, send, toward the pub-sub client based on the pub-sub control session, a message identifying the data function to be used by the pub-sub client for the pub-sub data session between the pub-sub client and the data function. At block 499, the method 400 ends. It will be appreciated that various functions presented herein with respect to FIG. 1 and FIG. 2 may be incorporated within the context of method 400 of FIG. 4.

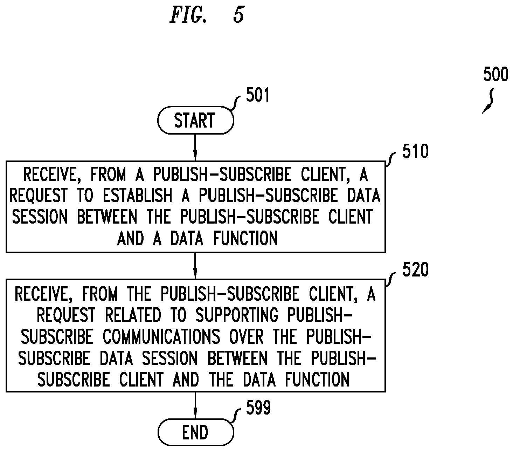

FIG. 5 depicts an example embodiment of a method for use by a data function to support the service selection function presented with respect to FIG. 2. It will be appreciated that, although primarily presented as being performed serially, at least a portion of the functions of the method 500 may be performed contemporaneously or in a different order than as presented with respect to FIG. 5. At block 501, the method 500 begins. At block 510, receive, from a pub-sub client, a request to establish a pub-sub data session between the pub-sub client and a data function. At block 520, receive, from the pub-sub client, a request related to supporting pub-sub communications over the pub-sub data session between the pub-sub client and the data function. At block 599, the method 500 ends. It will be appreciated that various functions presented herein with respect to FIG. 1 and FIG. 2 may be incorporated within the context of method 500 of FIG. 5.

FIG. 6 depicts an example embodiment for use of the pub-sub architecture of FIG. 1 to provide a service migration function that performs data function migration for a pub-sub client to change the data function being used during a pub-sub data session of the pub-sub client.

As illustrated in FIG. 6, a pub-sub system 600 is supporting a service migration function in which a pub-sub data session of a pub-sub client is migrated from an initial data function to a new data function. The service migration function is being performed for a pub-sub client 610 based on use of a set of pub-sub functions 620 including a CF 620-C and a pair of DFs 620-D1 and 620-D2. It is noted that the pub-sub client 610 and the set of pub-sub functions 620 may communicate based on a pub-sub protocol which may support various pub-sub protocol message types which may be used to support the service selection function for the pub-sub client 610.

In FIG. 6, the pub-sub client 610 has already established a pub-sub control session 621-C with the CF 620-C and has already established a pub-sub data session 621-D with the DF 620-D1. The pub-sub client 610 may have established the pub-sub control session 621-C with the CF 620-C and the pub-sub data session 621-D with the DF 620-D1 based on use of the service selection function as presented with respect to FIG. 2; however, it will be appreciated that either or both of the pub-sub control session 621-C with the CF 620-C and the pub-sub data session 621-D with the DF 620-D1 may have been established in various other ways.

In FIG. 6, the pub-client 610, after the pub-sub data session 621-D has been established between the pub-sub client 610 and the DF 620-D1, may begin using the pub-sub data session 621-D to support communication of pub-sub content between the pub-sub client 610 and other pub-sub clients (omitted for purposes of clarity), such as by operating as a publisher and sending pub-content to one or more other pub-sub clients operating as subscribers and/or operating as a subscriber and receiving pub-sub content from one or more other pub-sub clients operating as publishers.

At a first step of the service migration function, the CF 620-C selects a DF 620-D2 that is to be used by the pub-sub client 610 for pub-sub communications. It is noted that, since the pub-sub client 610 is already associated with a DF (namely, with the DF 620-D1 based on the pub-sub data session 621-D between the pub-sub client 610 and the DF 620-D1), the selection of the DF that is to be used by the pub-sub client 610 for pub-sub communications also may be considered to be a determination as to whether the pub-sub client 610 should remain associated with the existing DF for the pub-sub data session 621-D (which, in the example of FIG. 6, is DF 620-D 1) or whether the pub-sub client 610 should be migrated to a different DF for the pub-sub data session 621-D (which, in the example of FIG. 6, is the DF 620-D2 that is selected by the CF 620-C for migration of the pub-sub data session 621-D). This first step is denoted in FIG. 6 as SELECT 601.

The selection of the DF 620-D2 that is to be used by the pub-sub client 610 for pub-sub communications may be triggered in various ways. For example, the CF 620-C may perform the selection of the DF 620-D2 that is to be used by the pub-sub client 610 for pub-sub communication continuously (e.g., continuously reevaluating whether the pub-sub client 610 should continue to remain associated with the DF 620-D 1 or should be migrated to a different DF 620-D2 for the pub-sub data session 621-D), periodically (e.g. periodically reevaluating whether the pub-sub client 610 should continue to remain associated with the DF 620-D1 or should be migrated to a different DF 620-D2 for the pub-sub data session 621-D), based on detection of a condition (e.g., a condition associated with the pub-sub data session 621-D, a condition associated with the DF 620-D1, a condition associated with the pub-sub client 610, a condition associated with an underlying communication network supporting the pub-sub data session 621-D, or the like, as well as various combinations thereof), or the like, as well as various combinations thereof.

The selection of the DF 620-D2 that is to be used by the pub-sub client 610 for pub-sub communications may be performed in various ways. The CF 620-C may select the DF 620-D2 that is to be used by the pub-sub client 610 based on various types of information, at least some of which may have changed since the initial selection of the DF 620-D1 for the pub-sub client 610, such as one or more requirements for the pub-sub data session 621-D (e.g., a type of content to be communicated within the context of the pub-sub data session, a parameter or characteristic to be supported by the pub-sub data session (e.g., high throughput, low latency, support for deterministic communications, or the like), or the like), one or more parameters associated with the pub-sub client 610 (e.g., an identifier of the pub-sub client 610, a client type of the pub-sub client 610, a capability of the pub-sub client 610, an operating parameter of the pub-sub client 610, a location of the pub-sub client (e.g., a geographic location, a network location, or the like), or the like), one or more parameters associated with the DF 620-D1 (e.g., DF processing capacity, an underlying hardware issue, or the like), or the like, as well as various combinations thereof. The CF 620-C may select the DF 620-D2 that is to be used by the pub-sub client 610 based on one or more DF selection rules which may utilize various types of information to make the selection of the DF 620-D2 for the pub-sub client 610. The CF 620-C may select the DF 620-D2 that is to be used by the pub-sub client 610 based on one or more DF selection algorithms which may utilize various types of information to make the selection of the DF for the pub-sub client 610. The CF 620-C may select an optimal DF 620-D2 for use by the pub-sub client 610 or a suitable DF 620-D2 for use by the pub-sub client 610. It will be appreciated that the CF 620-C may select the DF 620-D2 for the pub-sub client 610 in various other ways.

In FIG. 6, for purposes of explaining the manner in which the migration of the pub-sub data session 621-D is achieved, it is assumed that the CF 620-C determines that it would be beneficial to migrate the pub-sub data session 621-D from the DF 620-D1 to the DF 620-D2. This may be the case, for example, where the CF 620-C determines that the DF 620-D2 is better suited than the DF 620-D1 to support the pub-sub data session 621-D for the pub-sub client 610. In other words, in the first step of the service migration function as discussed above, the CF 620-C selects the DF 620-D2 to be the new DF for the pub-sub data session 621-D of the pub-sub client 610.

At a second step of the service migration function, the CF 620-C triggers migration of the pub-sub data session 621-D from the DF 620-D1 that is currently supporting the pub-sub data session 621-D to the DF 620-D2 that has been selected for the pub-sub data session 621-D (namely, DF 620-D2). The CF 620-C triggers migration of the pub-sub data session from DF 620-D 1 to DF 620-D2 by sending, for delivery to the pub-sub client 610, an indication that the DF 620-D2 is to be used by the pub-sub client 610 for pub-sub communications. The indication that the DF 620-D2 is to be used by the pub-sub client 210 for pub-sub communications may be sent by the CF 620-C in a message of the pub-sub protocol (e.g., a Redirect message or other suitable message type). The message may include information identifying the DF 620-D2 selected by the CF 620-C for the pub-sub client 610. The message may include information which may be used by the pub-sub client 610 to establish the pub-sub data session 621-D between the pub-sub client 610 and the DF 620-D2, which may vary depending on the one or more of the pub-sub protocol used for the pub-sub data session 621-D between the pub-sub client 610 and the DF 620-D2, the connection type of the underlying connection that will be used to support the pub-sub data session 621-D between the pub-sub client 610 and the DF 620-D2, or the like, as well as various combinations thereof. For example, the message may include an address of the DF 620-D2, a URL identifying the DF 620-D2, or the like, as well as various combinations thereof. It will be appreciated that the message received by the pub-sub client 610 from the CF 620-C for the selected DF 620-D2 may include various other types of information identifying the DF 620-D2 selected by the CF 620-C for the pub-sub client 610. This second step is denoted in FIG. 6 in two different ways for indicating two different ways in which the CF 620-C may trigger migration of the pub-sub data session from DF 620-D 1 to DF 620-D2.

The CF 620-C may trigger migration of the pub-sub data session 621-D from the current DF 620 that is currently supporting the pub-sub data session 621-D (namely, DF 620-D1) to the DF 620 that has been selected as the new DF 620 for the pub-sub data session 621-D (namely, DF 620-D2) using the pub-sub control session 621-C. In this case, the CF 620-C sends the indication that the DF 620-D2 is to be used by the pub-sub client 610 via the pub-sub control session 621-C. This may be used where the pub-sub client 610 keeps the pub-sub control session 621-C active after the initial selection of the DF 620-D1 for the pub-sub client 610. This version of the second step, in which the pub-sub control session 621-C is used for informing the pub-sub client 610 of the decision to migrate the pub-sub data session 621-D to the new DF 620-D2, is denoted in FIG. 6 as REDIRECT 602-C.

The CF 620-C may trigger migration of the pub-sub data session 621-D from the current DF 620 that is currently supporting the pub-sub data session 621-D (namely, DF 620-D1) to the DF 620 that has been selected as the new DF 620 for the pub-sub data session 621-D (namely, DF 620-D2) using the pub-sub data session 621-D between the pub-sub client 610 and the DF 620-D1. In this case, the CF 620-C sends the indication that the DF 620-D2 is to be used by the pub-sub client 610 to the DF 620-D 1 for forwarding to the pub-sub client 610 via the pub-sub data session 621-D. This may be used where the pub-sub client 610 terminates the pub-sub control session 621-C after the initial selection of the DF 620-D1 for the pub-sub client 610 or where the pub-sub client 610 keeps the pub-sub control session 621-C active after the initial selection of the DF 620-D1 for the pub-sub client 610. This version of the second step, in which the pub-sub data session 621-D is used for informing the pub-sub client 610 of the decision to migrate the pub-sub data session 621-D to the new DF 620-D2, is denoted in FIG. 6 as REDIRECT 602-D.

At a third step of the service migration function, the pub-sub client 610 establishes the pub-sub data session 621-D with the new DF 620-D2. The pub-sub data session 621-D may be established over a connection between the pub-sub client 610 and the DF 620-D2 (e.g., a TCP connection, an HTTP connection, or any other suitable connection), where such connection may be established, within the context of the third step, based on information included in the message received by the pub-sub client 610 from the CF 620-C. The pub-sub data session 621-D with the DF 620-D2 may be established by sending a message of the pub-sub protocol from the pub-sub client 610 to the DF 620-D2 (e.g., a CONNECT message or other suitable message of a pub-sub protocol). The message sent by the pub-sub client 610 to establish the pub-sub data session 621-D between the pub-sub client 610 and the DF 620-D2 may include information for use by the DF 620-D2 to support the pub-sub data session 621-D, information for use by the DF 620-D2 to use the pub-sub data session 621-D for communication of pub-sub content, or the like, as well as various combinations thereof. This third step is denoted in FIG. 3 as CONNECT 603.

At a fourth step of the service migration function, the pub-sub client 610 terminates the pub-sub data session 621-D with the original DF 620-D1. The pub-sub data session 621-D with the DF 620-D1 may be terminated by sending a message of the pub-sub protocol from the pub-sub client 610 to the DF 620-D1 (e.g., a DISCONNECT message or other suitable message of a pub-sub protocol). It will be appreciated that, although primarily presented with respect to the case in which the pub-sub client 610 terminates the pub-sub data session 621-D with the original DF 620-D1 after establishment of the pub-sub data session 621-D with the new DF 620-D2, in some cases the pub-sub client 610 may not terminate the pub-sub data session 621-D with the original DF 620-D1 after establishment of the pub-sub data session 621-D or at least may not terminate the pub-sub data session 621-D with the original DF 620-D1 until a condition is satisfied (e.g., a threshold length of time has passed, a determination has been made that all data sent over the pub-sub data session 621-D prior to completion of the migration has been successfully received, or the like), thereby ensuring that there is no loss of data during service migration.

It will be appreciated that, although primarily presented with respect to performing service migration for a single pub-sub client 610 (for purposes of clarity in describing various aspects of pub-sub service migration), service migration may be initiated for multiple pub-sub clients. For example, the CF 620-C may initiate service migration for multiple pub-sub clients contemporaneously or simultaneously under various scenarios. For example, the CF 620-C may initiate service migration for multiple pub-sub clients associated with the DF 620-D1 based on a determination that the DF 620-D1 has become overloaded (e.g., offloading multiple pub-sub clients from the DF 620-D1 to one or more other DFs until the DF 620-D1 is no longer overloaded, where it will be appreciated that at least some of the pub-sub clients associated with the DF 620-D1 may remain associated with the DF 620-D1). For example, the CF 620-C may initiate service migration for multiple pub-sub clients associated with the DF 620-D1 when the multiple pub-sub clients are associated with the same content delivery (e.g., a producer and multiple consumers under the same content topic). It will be appreciated that service migration may be initiated for a set of multiple pub-sub clients in response to various other conditions, under various other scenarios, or the like, as well as various combinations thereof.

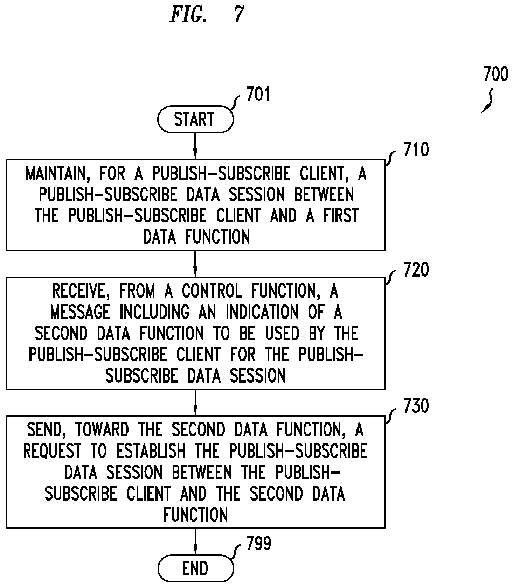

FIG. 7 depicts an example embodiment of a method for use by a pub-sub client to support the service migration function presented with respect to FIG. 6. It will be appreciated that, although primarily presented as being performed serially, at least a portion of the functions of the method 700 may be performed contemporaneously or in a different order than as presented with respect to FIG. 7. At block 701, the method 700 begins. At block 710, maintain, for a pub-sub client, a pub-sub data session between the pub-sub client and a first data function. At block 720, receive, from a control function, a message including an indication of a second data function to be used by the pub-sub client for the pub-sub data session. At block 730, send, toward the second data function, a request to establish the pub-sub data session between the pub-sub client and the second data function. At block 799, the method 700 ends. It will be appreciated that various functions presented herein with respect to FIG. 1 and FIG. 6 may be incorporated within the context of method 700 of FIG. 7.

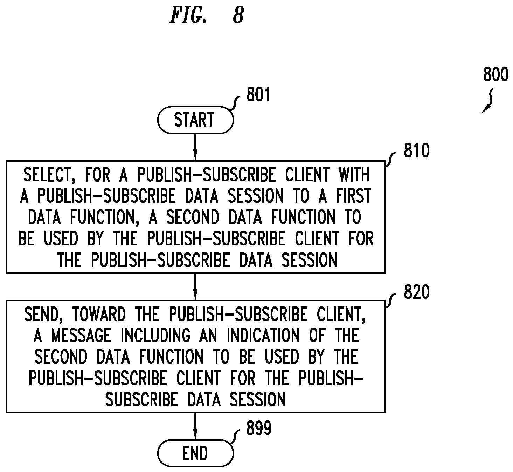

FIG. 8 depicts an example embodiment of a method for use by a control function to support the service migration function presented with respect to FIG. 6. It will be appreciated that, although primarily presented as being performed serially, at least a portion of the functions of the method 800 may be performed contemporaneously or in a different order than as presented with respect to FIG. 8. At block 801, the method 800 begins. At block 810, select, for a pub-sub client with a pub-sub data session to a first data function, a second data function to be used by the pub-sub client for the pub-sub data session. At block 820, send, toward the pub-sub client, a message including an indication of the second data function to be used by the pub-sub client for the pub-sub data session. At block 899, the method 800 ends. It will be appreciated that various functions presented herein with respect to FIG. 1 and FIG. 6 may be incorporated within the context of method 800 of FIG. 8.

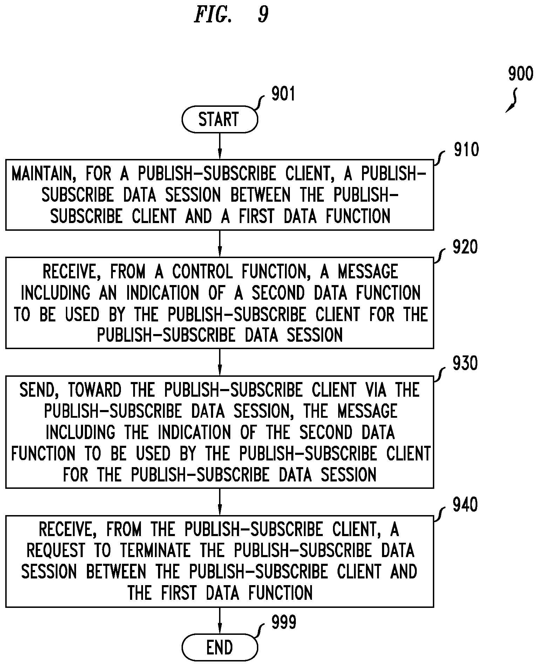

FIG. 9 depicts an example embodiment of a method for use by a data function to support the service selection migration presented with respect to FIG. 6. It will be appreciated that, although primarily presented as being performed serially, at least a portion of the functions of the method 900 may be performed contemporaneously or in a different order than as presented with respect to FIG. 9. At block 901, the method 900 begins. At block 910, maintain, for a pub-sub client, a pub-sub data session between the pub-sub client and a first data function. At block 920, receive, from a control function, a message including an indication of a second data function to be used by the pub-sub client for the pub-sub data session. At block 930, send, toward the pub-sub client via the pub-sub data session, the message including the indication of the second data function to be used by the pub-sub client for the pub-sub data session. At block 940, receive, from the pub-sub client, a request to terminate the pub-sub data session between the pub-sub client and the first data function. At block 999, the method 900 ends. It will be appreciated that various functions presented herein with respect to FIG. 1 and FIG. 6 may be incorporated within the context of method 900 of FIG. 9.

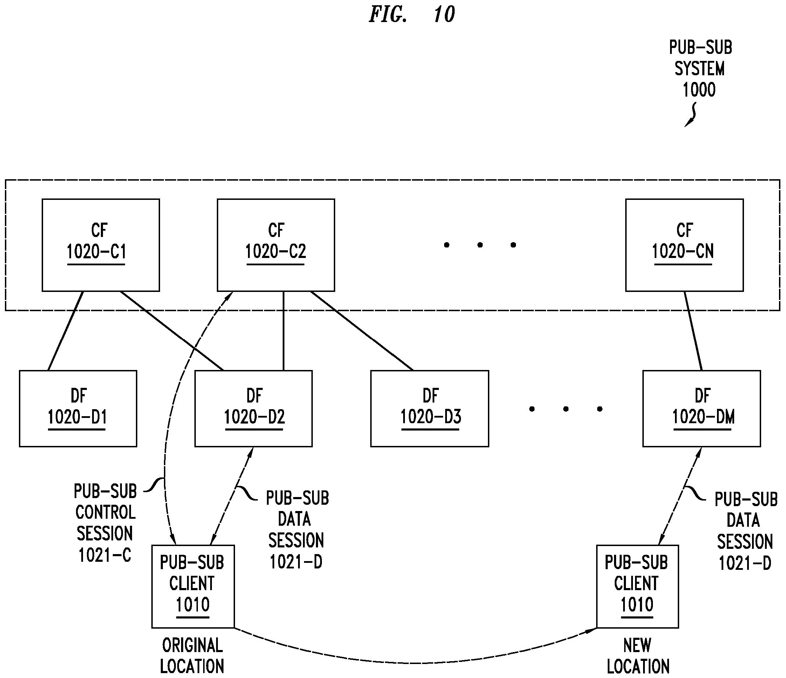

FIG. 10 depicts an example embodiment of a pub-sub system including separate control functions and data functions configured to support pub-sub communications by pub-sub clients.

As illustrated in FIG. 10, a pub-sub system 1000 includes a pub-sub client 1010 and a set of pub-sub functions including a set of control functions (CFs) 1020-C1 - 1020-CN (collectively, CFs 1020-C) and a set of data functions (DFs) 1020-D1 - 1020-DM (collectively, DFs 1020-D). The CFs 1020-C provide a logical pub-sub control plane and the DFs 1020-D provide a logical pub-sub data plane. The CFs 1020-C may communicate with ones of the DFs 12020-D to facilitate service selection and service migration (illustratively, CF 1020-C1 is associated with DFs 1020-D1 and 1020-D2, CF 1020-C2 is associated with DFs 1020-D2 and 1020-D3, CF 1020-CN is associated with CF 1020-DM, and so forth). It will be appreciated that, although omitted for purposes of clarity, service selection and migration functions may be facilitated based on support for communications of ones of the CFs 1020-C with each other and/or support for communications of ones of the DF 1020-D with each other. The pub-sub client 1010 can connect to any of the CFs 1020-C for control-related communications and can be directed by the CFs 1020-C to any of the DFs 1020-D for establishment of pub-sub data sessions to support pub-sub communications.

In the example of FIG. 10, the pub-sub client 1010 establishes a pub-sub control session 1021-C with the CF 1020-C2, which then initially selects the DF 1020-D2 for the pub-sub client 1010 and then triggers a migration of the pub-sub client 1010 from the DF 1020-D2 to the DF 1020-DM based on movement of the pub-sub client 1010 (based on a determination by the CF 1020-C2 that the pub-sub client 1010 can be better served by the DF 1020-DM than the DF 1020-D2 after the movement of the pub-sub client 1010). As illustrated in FIG. 10, this results in a migration of the pub-sub data session 1021-D from the DF 1020-D2 to the DF 1020-DM. It is noted that this migration may be facilitated by other communications which have been omitted for purposes of clarity, such as based on communications between the CF 1020-C2 associated with the DF 1020-D2 and the CF 1020-CN associated with the DF 1020-DM (e.g., to facilitate establishment of the pub-sub data session 1021-D with the new DF 1020-DM), communications between the DF 1020-D2 and the DF 1020-DM (e.g., to facilitate delivery of data in transit at the time of migration), or the like.

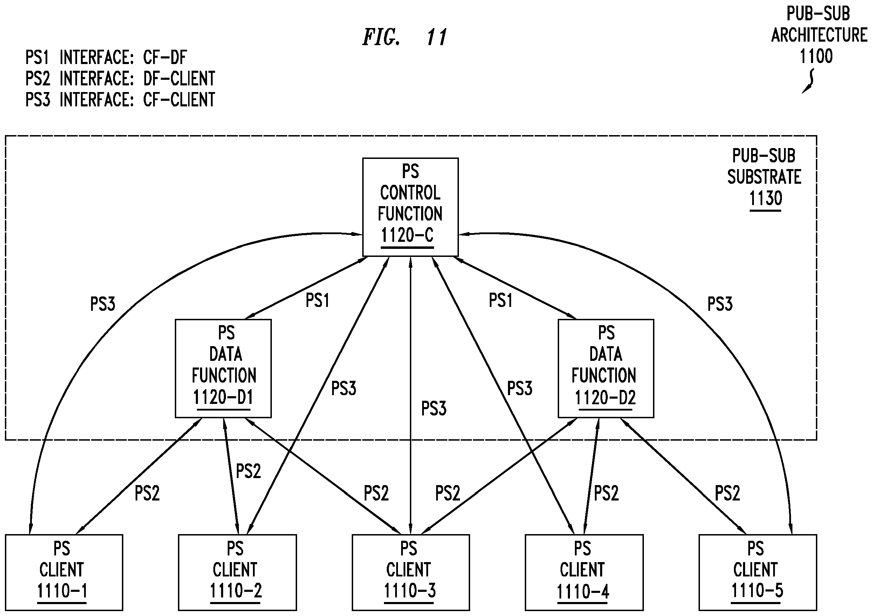

FIG. 11 depicts an example embodiment of a pub-sub architecture configured to provide publish-subscribe-as-a-service (PSaaS).

As illustrated in FIG. 11, a pub-sub architecture 1100 includes a set of pub-sub (PS) clients 1110-1 to 1110-5 (collectively, pub-sub clients 1110), a pair of pub-sub (PS) data functions 1120-D1 and 1120-D2 (collectively, PS data functions 1120-D), and a pub-sub (PS) control function 1120-C, with communications between the various elements being supported based on three communication interface types (denoted as a PS1 interface, a PS2 interface, and a PS3 interface). The combination of the PS control function 1120-C and the PS data functions 1120-D provides a pub-sub substrate 1130 that includes a logically centralized control function (namely, PS control function 1120-C) and a distributed data function (namely, PS data functions 1120-D). The pub-sub substrate 1130 and the associated communication interface types support a pub-sub service model that enables PSaaS for the pub-sub clients 1110.

The PS1 interface supports CF-DF communications between PS control function 1120-C and PS data functions 1120-D. The PS1 interface may be used by the PS control function 1120-C to inform PS data functions 1120-D regarding various aspects of pub-sub data sessions that may be established by PS clients 1110 with the PS data functions 1120-D (e.g., informing PS data functions 1120-D about incoming/outgoing PS clients 1110, parameters of pub-sub data functions which may be established by PS clients 1110 (e.g., needs of the PS clients 1110 for pub-sub data sessions, content types to be supported within the context of pub-sub data sessions, or the like), or the like, as well as various combinations thereof). The PS1 interface between a PS control function 1120-C and a PS data function 1120-D may be a persistent connection or session between the PS control function 1120-C and the PS data function 1120-D.

The PS2 interface supports DF-client communications between PS data functions 1120-D and PS clients 1110. The PS2 interface may be used by the PS clients 1110 to establish pub-sub data sessions with PS data functions 1120-D and to use the pub-sub data sessions to support communication of pub-sub content (e.g., providing pub-sub content to PS data functions 1120-D for distribution to other pub-sub clients 1110 as subscribers and/or receiving pub-sub content from PS data functions 1120-D where the pub-sub content originates from other pub-sub clients as publishers). The PS2 interface may be used by PS clients 1110 for communications with the PS control function 1120-C via the PS data functions 1120 (e.g., where the PS clients 1110 disconnect from the PS control function 1120-C after the PS clients 1110 establish pub-sub data sessions with PS data functions 1120-D). The PS2 interface between a pub-sub client 1110 and a PS data function 1120-D may be a persistent session between the pub-sub client 1110 and the PS data function 1120-D.

The PS3 interface supports CF-client communications between the PS control function 1120-C and PS clients 1110. The PS3 interface may be used by the PS clients 1110 to establish pub-sub control sessions with the PS control function 1120-C and to use the pub-sub control sessions to support communication of pub-sub control messages. The PS3 interface between a pub-sub client 1110 and the PS control function 1120-C may be a persistent session between the pub-sub client 1110 and the PS control function 1120-C, or the PS3 interface between a PS client and the PS control function 1120-C may be disconnected after the PS client 1110 establishes a pub-sub data session with a PS data function 1120-D.

It will be appreciated that the pub-sub architecture 1100, although depicted and described as including specific numbers and arrangements of elements based on specific types of interfaces (illustratively, a single PS control function 1120-C, two PS data functions 1120-D1 and 1120-D2, and five PS clients 1110, based on three interface types), various other numbers and arrangements of elements may be supported (e.g., multiple PS control functions, more than two (as well as large numbers of) PS data functions, fewer or more (as well as large numbers of) PS clients, or the like, as well as various combinations thereof), may support other interface types (e.g., a fourth type interface may be supported for direct communications between PS control functions 1120-C), or the like, as well as various combinations thereof.

Various example embodiments for supporting pub-sub systems, as discussed herein, may be configured to provide pub-sub architectures that support massive scale (e.g., massive numbers of producers producing immense amounts of content for distribution to subscribers), immense dynamism (e.g., dynamism in terms of one or more of the numbers of pub-sub clients in the pub-sub system, the locations from which the pub-sub clients join the pub-sub system, the lengths of time for which the pub-sub clients remain active within the pub-sub system, or the like, as well as various combinations thereof), and extreme diversity (e.g., diversity in terms of the types of content being delivered, types of protocols being used for content delivery, traffic characteristics of traffic transporting content, fan-out characteristics of various groups of pub-sub clients within the pub-sub system (e.g., unicast versus multicast), or the like as well as various combinations thereof). It will be appreciated that such characteristics enabled by various example embodiments of pub-sub systems as presented herein may be useful within the context of various types of environments within which pub-sub capabilities may be applied to support communications between endpoints (e.g., 6G networks, Industrial Internet contexts, massive sensing, or the like), which are discussed further below). It will be appreciated that such characteristics enabled by various example embodiments of pub-sub systems as presented herein may be further understood by considering various aspects of the application of such example embodiments within the context of 6G networks, as discussed further below.

In 6G wireless networking, the next evolution in wireless networking, it is expected that massive amounts of network and application data will be produced and consumed by various entities within the network. The 5G System Architecture is defined as a Service Based Architecture, i.e., a system architecture in which the system functionality is achieved using a set of Network Functions (NF) where NFs communicate for accessing services in support of end user communications and the communications between NFs are primarily peer-to-peer-based communications. In 6G wireless networking, on the other hand, there are expected to be several challenges. For example, it is expected that, in both the core and RAN portions of 6G networks, subscription-based message dissemination will be one-to-many, many-to-one, or many-to-many. Furthermore, it is expected that additional function types (in addition to NFs) will need to be supported (e.g., new function types such as Application Functions (AFs) or the like). For example, such communications may be used for analytics data distribution, machine learning (ML) model distribution, Base Station IQ Model Sharing, Conditional Handover, Multiparty XR applications, and so forth. Moreover, it is expected that diverse classes of pub-sub groups will co-exist with their own data production and consumption patterns and delivery requirements.

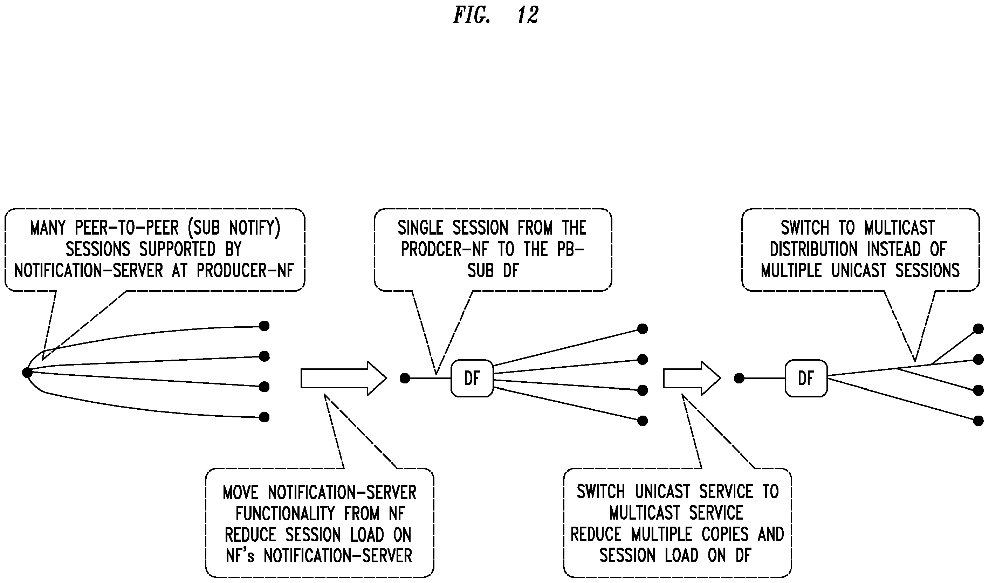

Various example embodiments for supporting pub-sub systems may be configured to support various other capabilities which may enable various use cases while providing various benefits. For example, various example embodiments may be configured to support movement of notification-server functionality from the NF to a DF in the network to address the many peer-to-peer sessions (e.g., sub-notify) typically supported at the NF's notification server, thereby reducing the session load at the NF's notification-server. For example, various example embodiments may be configured to support migration of DFs to different locations to support increases in client concentrations in those areas, thereby reducing client latency and providing better network resource usage. For example, various example embodiments may be configured to support dynamic expansion of DF capacity (e.g., splitting a single DF into multiple DFs and/or instantiating new DFs) and contraction of DF capacity (e.g., combining multiple DFs into a single DF and/or terminating existing DFs) to enable support for dynamic client concentration changes over various geographic area, thereby reducing DF workload, reducing client latency, and providing better network resource usage. For example, various example embodiments may be configured to enable traffic engineered paths amongst DFs and clients, thereby providing better quality-of-service and better network resource usage. For example, various example embodiments may be configured to support different pub-sub service strategies per content types since not all content types need the same treatment, thereby enabling content-specific QoS, differentiated network service, and so forth. For example, various example embodiments may be configured to support switching between unicast service and multicast service based on changes in the number of peer-to-peer (e.g., sub-notify) sessions at the NF, thereby reducing multiple copies and session load on DFs. It will be appreciated that at least some such capabilities are presented with respect to FIGs. 12 - 14 as discussed further below. It will be appreciated that various example embodiments for supporting pub-sub systems may be configured to support various other capabilities which may enable various other use cases while providing various other benefits.

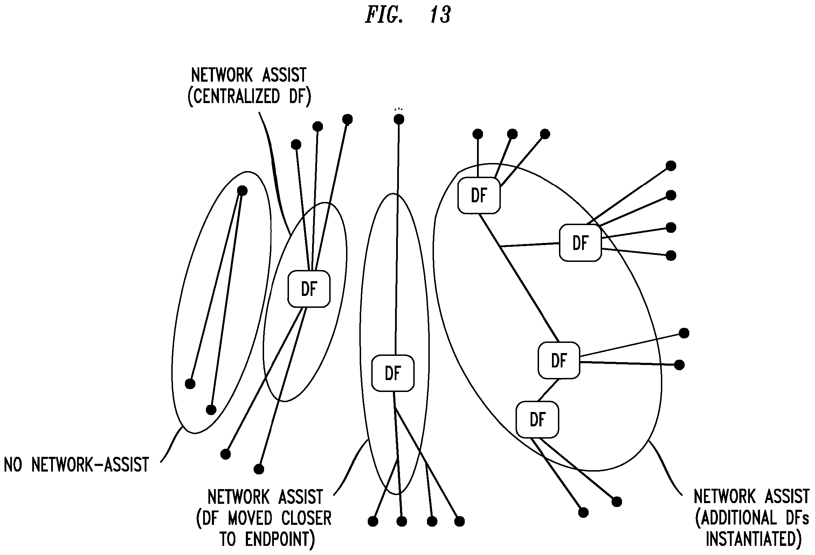

Various example embodiments may be configured to support diversity within the context of the 6G architectural evolution as well as in various other contexts within which pub-sub may be employed. For example, the diversity may be in terms of diversity of protocol usage (e.g., switching between non-pub-sub and pub-sub protocols, switching unicast and multicast protocols and so forth), diversity of content types (e.g., in terms of delivery requirements and so forth), or the like, as well as various combinations thereof. It will be appreciated that support for diversity within the context of the 6G architectural evolution, as well as in various other contexts within which pub-sub may be employed, may be further understood by way of reference to FIGs. 12 and 13 as discussed further below.

FIG. 12 depicts an example embodiment of use of a pub-sub system to support diversity in terms of protocol usage. As illustrated in FIG. 12, as the number of subscribers increases, the pub-sub system may dynamically transition (1) from use of peer-to-peer communications between clients to use of pub-sub communications based on use of a DF where the clients establish pub-sub sessions with the DF based on unicast to support communications between the clients and (2) from use of a DF where the clients establish pub-sub sessions with the DF based on unicast to support communications between the clients to use of a DF where the clients establish pub-sub sessions with the DF based on multicast to support communications between the clients.

For example, the load at the producer-NF may be monitored and the pub-sub system may switch between use of sub-notify and pub-sub based on the load at the NF-producer (e.g. switching to a more scalable architecture such as pub-sub when the load at the producer-NF rises above the threshold and switching back to sub-notify when the load at the producer-NF falls below the threshold), and the pub-sub system may further switch between use of pub-sub based on unicast and use of pub-sub based on multicast depending on the number of subscribers active within the system.

For example, when the load on a notification-server built into a producer-NF goes above some predetermined threshold, the CF may be made aware of that condition using the PS 1 interface and the CF may then decide to move the notification-server load from the NF to the network using a DF at a suitable data center (e.g., an existing DF or instantiating a new DF) and, as a result, send REDIRECT messages to all of the clients (including the publisher at the producer-NF) to move from the notification-server at the producer-NF to the newly selected in-network target DF. This procedure helps in reducing the load at the producer-NF. Additionally, after bringing all the sessions to the target DF belonging to the pub-sub substrate, it is further possible to replace multiple unicast sessions with a single multicast session, thereby reducing multiple copy cost at the DF and link loads in the network.

FIG. 13 depicts an example embodiment of use of a pub-sub system to support diversity in terms of content and content session types. As illustrated in FIG. 13, different arrangements of clients and DFs may be created and used (four are illustrated in FIG. 13) depending on various factors, such as the content being supported, locations of the clients, or the like, as well as various combinations thereof. For example, as depicted on the left side of FIG. 13, peer-to-peer sessions between clients may be used. For example, as depicted in the center-left of FIG. 13, where relatively equal numbers of producer and consumer clients are participating, the DF may be located relatively equidistant between the producer clients and the consumer clients. For example, as depicted in the center-right of FIG. 13, where a large number of clients are located in one location and a relatively small number of clients are located in another location, the DF may be located relatively close to the larger group of clients. For example, as depicted on the right side of FIG. 13, where a large number of clients are located across a number of different locations, multiple DFs may be located near the groups of clients and the DFs may be interconnected using various communications technologies.

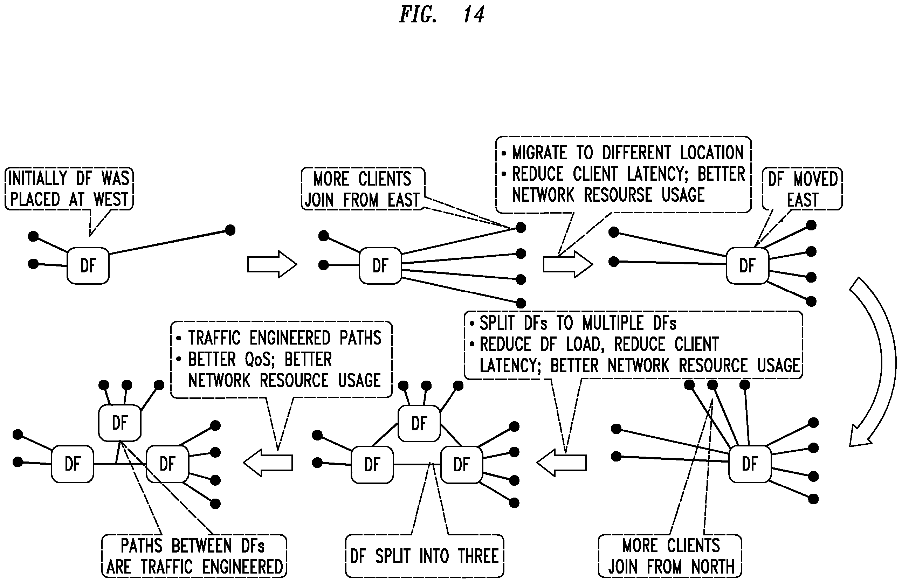

Various example embodiments may be configured to support dynamism within the context of the 6G architectural evolution as well as in various other contexts within which pub-sub may be employed. For example, the dynamism may be in terms of the number of pub-sub clients to be supported, the locations at which the pub-sub clients are to be supported (especially as pub-sub clients move), or the like, as well as various combinations thereof. For example, in a 6G network, NF(s)/AF(s) will be cloud resident and can be spun on/off on demand at any location within the network (as there will be many data centers within the network), and the NF(s)/AF(s) can dynamically join a pub-sub-based content distribution session and/or move about the network while connected to the pub-sub session. It will be appreciated that support for dynamism within the context of the 6G architectural evolution, as well as in various other contexts within which pub-sub may be employed, may be further understood by way of reference to FIG. 14 as discussed further below.

FIG. 14 depicts an example embodiment of use of a pub-sub system to support dynamism in client behavior. For example, as depicted on the top left of FIG. 14, a DF is initially placed toward the West because more clients are located there than in the East. DFs may be interconnected based on traffic engineered paths for better QoS for the pub-sub clients and better network resource usage. For example, as depicted on the top middle and top right of FIG. 14, as more clients join from the East the DF is migrated from the West to the East to reduce client latency and provide better network resource usage. For example, as depicted on the bottom right and bottom middle of FIG. 14, as more client join from the North the initial DF is split into multiple DFs which are provided close to the groups of clients, thereby reducing DF load, reducing client latency, and providing better network resource usage. For example, as depicted on the bottom left of FIG. 14, the DFs may be interconnected based on traffic engineered paths for better QoS for the pub-sub clients and better network resource usage. In this manner, various example embodiments presented herein, including example embodiments supporting PSaaS, may be configured to support dynamic migration and splitting of DF load, including bringing DFs closer to pub-sub clients for supporting low latency connectivity, as conditions change (e.g., as pub-sub clients join/leave, as pub-sub clients migrate, and so forth)

In this manner, various example embodiments may be configured to enable pub-sub systems to support massive scale (e.g., handling large numbers of pub-sub clients), immense dynamism (e.g., individual pub-sub clients may join and stay in the pub-sub system for a long (potentially for their lifetime) and/or widely variable durations, initiate pub-sub sessions from any location in the network and move about the network, have highly dynamic numbers, and so forth), and extreme diversity (e.g., the content being disseminated can have widely varying traffic and fan-out characteristics across different groups of clients where characteristics also can change during the lifetime of the sessions, and clients may also opt for switching protocols for content delivery (e.g., switch between sub-notify and pub-sub, or between multiple unicast and multicast)).

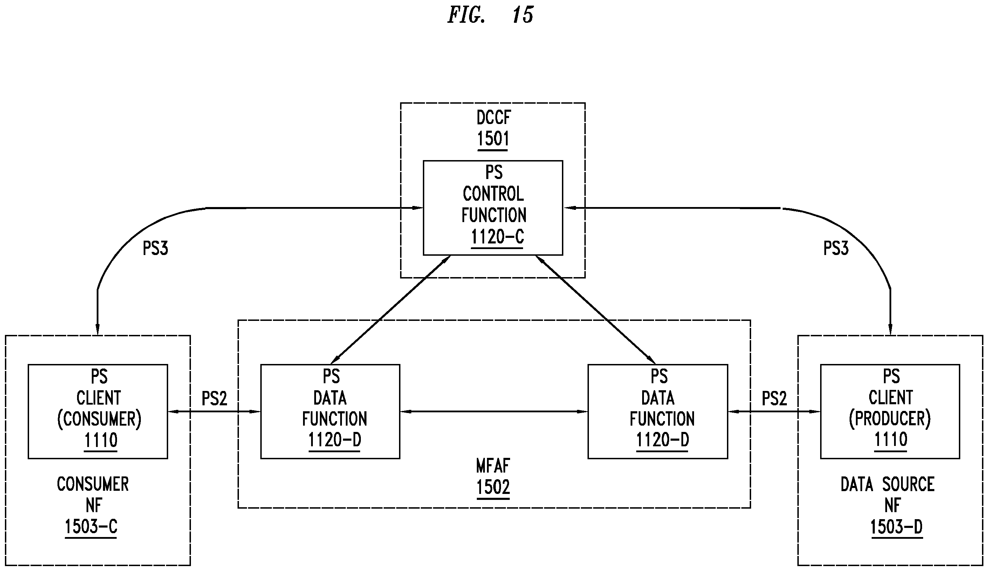

FIG. 15 depicts an example embodiment for use of the pub-sub architecture of FIG. 11 within the context of a particular type of communication network. Namely, FIG. 15 depicts use of the pub-sub architecture 1100 of FIG. 11 to support the Data Collection Coordination Function (DCCF) that is defined in the Third Generation Partnership Project (3GPP) Technical specification (TS) 23.288, Release 17, Version 17.4.0. In this 3GPP standard, the DCCF is defined as follows: "Data Collection Coordination and Delivery coordinates the collection and distribution of data requested by NF consumers. It prevents data sources from having to handle multiple subscriptions for the same data and send multiple notifications containing the same information due to uncoordinated requests from data consumers. Data is provided to Consumers or notification endpoints according to the Delivery Option configured on the DCCF. Delivery Options are: (1) Delivery via DCCF: Consumers or Notification Endpoints receive the data from the DCCF and (2) Delivery via Messaging Framework: Consumers or Notification Endpoints receive the data from the Messaging Framework via the services offered by the MFAF." In at least some example embodiments, the mapping of the 3GGP functions onto the pub-sub architecture may be performed such that the PS control function 1120-C is mapped into a DCCF 1501, the set of PS data functions 1120-D is mapped into an MFAF 1502, two of the PS clients 1110 are mapped into a Data Source NF 1503-P and a Consumer NF 1503-C. It will be appreciated that the PSaaS architecture of FIG. 11 may be mapped into the 3GGP functions of 3GPP TS 23.288, Release 17, Version 17.4.0 in various other ways. It will be appreciated that the PSaaS architecture of FIG. 11 may be mapped into various communication networks in various ways to provide improved pub-sub based communications in support of implementation of such communication networks.

Various example embodiments for supporting pub-sub systems may provide various advantages or potential advantages. For example, various example embodiments for supporting pub-sub systems may support separation of the control plane functions and data plane functions of legacy pub-sub brokers into control functions and data functions, with which pub-sub clients establish sessions individually, thereby enabling pub-sub clients to use pub-sub control sessions with control functions for more generic control plane operations and to use pub-sub data sessions with data functions that are specifically selected for the pub-sub clients in order to improve or optimize pub-sub communications for the pub-sub clients (e.g., based on types of content to be communicated, protocols to be used, or the like, as well as various combinations thereof). For example, various example embodiments for supporting pub-sub systems may separate the control and data plane operations of legacy pub-sub brokers within the context of a cloud integrated networking architecture where a logically centralized but physically distributed pub-sub control plane can be realized, and data plane operations of legacy pub-sub brokers can be spun on/off dynamically, on-demand in the cloud. For example, various example embodiments for supporting pub-sub systems may separate the control and data plane operations of legacy pub-sub brokers while extending client interfaces of pub-sub clients such that appropriate data functions can be selected for pub-sub clients at initial connection time based on requirements of the pub-sub clients and such that appropriate data functions can be reselected for pub-sub clients (even within active pub-sub sessions) to ensure that pub-sub operations for pub-sub clients are continually being improved or even optimized. For example, various example embodiments for supporting pub-sub systems may enable pub-sub clients to selectively connect to different data functions based on the needs of the pub-sub clients, thereby enabling different data functions to be optimized in various ways (e.g., supporting specialties in handling data plane functions) and, therefore, obviating the need for every data function to support all possible data plane requirements (which is an extremely expensive approach). For example, various example embodiments for supporting pub-sub systems may support dynamic selection and reselection of data functions for pub-sub sessions of pub-sub clients. For example, various example embodiments for supporting pub-sub systems may support scale, dynamism, and diversity in pub-sub systems without a need for use of broker federation (e.g., where several legacy pub-sub brokers can be interconnected over a wide area network, and pub-sub clients can join at any legacy pub-sub broker and get the same service as if the legacy pub-sub brokers are logically centralized), which may be limited in terms of communication capabilities (e.g.. bandwidth efficiency and end-to-end latency) and support for dynamism and diversity, although it will be appreciated that in at least some example embodiments various aspects of broker federation also may be applied. For example, various example embodiments for supporting pub-sub systems may support scale, dynamism, and diversity in pub-sub systems without a need for use of software defined networking (SDN) based pub-sub (e.g., using OpenFlow to support the multicast delivery required by the pub-sub application), which may be limited by data plane scalability and control plane overhead and support for dynamism and diversity, although it will be appreciated that in at least some example embodiments various aspects of SDN-aware pub-sub also may be applied. For example, various example embodiments for supporting pub-sub systems may support scale, dynamism, and diversity in pub-sub systems without a need for a new pub-sub data plane (e.g., based on in-network packet filtering), which may require disruptive changes in network infrastructure and may be limited in support for dynamism and diversity, although it will be appreciated that in at least some example embodiments various aspects of SDN-aware pub-sub also may be applied. For example, various example embodiments for supporting pub-sub systems may support scale, dynamism, and diversity in pub-sub systems without a need for use of network-assisted pub-sub based on legacy pub-sub brokers (e.g., where legacy pub-sub brokers are placed at various edge locations of the network where publishers and subscribers connect and pub-sub data is disseminated between edge locations through network-level multicast as opposed to point-to-point connections), which may be limited in terms of support for dynamism and diversity, although it will be appreciated that in at least some example embodiments various aspects of network-assisted pub-sub also may be applied. It will be appreciated that various example embodiments for supporting pub-sub systems may provide various other advantages or potential advantages.

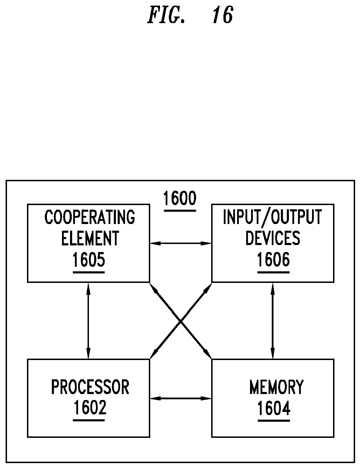

FIG. 16 depicts an example embodiment of a computer suitable for use in performing various functions presented herein.

The computer 1600 includes a processor 1602 (e.g., a central processing unit (CPU), a processor, a processor having a set of processor cores, a processor core of a processor, or the like) and a memory 1604 (e.g., a random access memory (RAM), a read-only memory (ROM), or the like). In at least some example embodiments, the computer 1600 may include at least one processor and at least one memory storing instructions that, when executed by the at least one processor, cause the computer to perform various functions presented herein.

The computer 1600 also may include a cooperating element 1605. The cooperating element 1605 may be a hardware device. The cooperating element 1605 may be a process that can be loaded into the memory 1604 and executed by the processor 1602 to implement various functions presented herein (in which case, for example, the cooperating element 1605 (including associated data structures) can be stored on a non-transitory computer readable medium, such as a storage device or other suitable type of storage element (e.g., a magnetic drive, an optical drive, or the like)).

The computer 1600 also may include one or more input/output devices 1606. The input/output devices 1606 may include one or more of a user input device (e.g., a keyboard, a keypad, a mouse, a microphone, a camera, or the like), a user output device (e.g., a display, a speaker, or the like), one or more network communication devices or elements (e.g., an input port, an output port, a receiver, a transmitter, a transceiver, or the like), one or more storage devices (e.g., a tape drive, a floppy drive, a hard disk drive, a compact disk drive, or the like), or the like, as well as various combinations thereof.

It will be appreciated that computer 1600 may represent a general architecture and functionality suitable for implementing functional elements described herein, portions of functional elements described herein, or the like, as well as various combinations thereof. For example, the computer 1600 may provide a general architecture and functionality that is suitable for implementing one or more elements presented herein. For example, the computer 1600 may provide a general architecture and functionality that is suitable for implementing at least one of a pub-sub client or a portion thereof, a CF or a portion thereof, a DF or a portion thereof, a combination of a CF and a DF, or the like, as well as various combinations thereof.

It will be appreciated that at least some of the functions presented herein may be implemented in software (e.g., via implementation of software on one or more processors, for executing on a general purpose computer (e.g., via execution by one or more processors) so as to provide a special purpose computer, and the like) and/or may be implemented in hardware (e.g., using a general purpose computer, one or more application specific integrated circuits, and/or any other hardware equivalents).

It will be appreciated that at least some of the functions presented herein may be implemented within hardware, for example, as circuitry that cooperates with the processor to perform various functions. Portions of the functions/elements described herein may be implemented as a computer program product wherein computer instructions, when processed by a computer, adapt the operation of the computer such that the methods and/or techniques described herein are invoked or otherwise provided. Instructions for invoking the various methods may be stored in fixed or removable media (e.g., non-transitory computer readable media), transmitted via a data stream in a broadcast or other signal bearing medium, and/or stored within a memory within a computing device operating according to the instructions.

It will be appreciated that the term "non-transitory" as used herein is a limitation of the medium itself (i.e., tangible, not a signal) as opposed to a limitation of data storage persistency (e.g., RAM versus ROM).

It will be appreciated that, as used herein, "at least one of <a list of two or more elements>" and "at least one of the following: <a list of two or more elements>" and similar wording, where the list of two or more elements are joined by "and" or "or", mean at least any one of the elements, or at least any two or more of the elements, or at least all the elements.

It will be appreciated that, as used herein, the term "or" refers to a non-exclusive "or" unless otherwise indicated (e.g., use of "or else" or "or in the alternative").

It will be appreciated that, although various embodiments which incorporate the teachings presented herein have been shown and described in detail herein, those skilled in the art can readily devise many other varied embodiments that still incorporate these teachings.

## Claims

1. An apparatus (1600), comprising:
means for sending (310), toward a control function (220-C), a request (201) to establish a publish-subscribe control session (221-C) between a publish-subscribe client (210) and the control function (220-C);
means for receiving (320), based on the publish-subscribe control session (221-C), a response identifying a data function (220-D) to be used by the publish-subscribe client (210) for a publish-subscribe data session (221-D); and
means for sending (330), toward the data function, a request (204) to establish the publish-subscribe data session (221-D) between the publish-subscribe client (210) and the data function (220-D).

2. The apparatus (1600) of claim 1, wherein the request (201) to establish the publish-subscribe control session (221-C) is sent over a connection between the publish-subscribe client (210) and the control function (220-C) and using a message of a publish-subscribe protocol.

3. The apparatus (1600) of claim 1, wherein the request (201) to establish the publish-subscribe control session (221-C) includes a parameter specified for the publish-subscribe data session (221-D), wherein the data function (220-D) is selected from a set of available data functions based on the parameter specified for the publish-subscribe data session (221-D).

4. The apparatus (1600) of claim 3, wherein the parameter specified for the publish-subscribe data session (221-D) includes at least one of a content type of content to be communicated on the publish-subscribe data session (221-D), a client type of the publish-subscribe client (210), or a location of the publish-subscribe client (210).

5. The apparatus (1600) of claim 1, wherein the request (204) to establish the publish-subscribe data session (221-D) is sent over a connection between the publish-subscribe client (210) and the data function (220-D) and using a message of a publish-subscribe protocol.

6. The apparatus (1600) of claim 1, further comprising:
means for sending, toward the data function (220-D) based on the publish-subscribe data session (221-D), a request to publish content or a request to subscribe to content.

7. The apparatus (1600) of claim 1, further comprising:
means for receiving a message identifying a second data function to be used by the publish-subscribe client (210) for the publish-subscribe data session (221-D); and
means for sending, toward the second data function, a request to establish the publish-subscribe data session (221-D) between the publish-subscribe client (210) and the second data function.

8. The apparatus (1600) of claim 7, wherein the message identifying the second data function is received via the publish-subscribe control session (221-C).

9. The apparatus (1600) of claim 7, wherein the message identifying the second data function is received via the publish-subscribe data session (221-D).

10. A method (300), comprising:
sending (310), toward a control function (220-C), a request (201) to establish a publish-subscribe control session (221-C) between a publish-subscribe client (210) and the control function (220-C);
receiving (320), based on the publish-subscribe control session (221-C), a response identifying a data function (220-D) to be used by the publish-subscribe client (210) for a publish-subscribe data session (221-D); and
sending (330), toward the data function (220-D), a request (204) to establish the publish-subscribe data session (221-D) between the publish-subscribe client (210) and the data function (220-D).

11. The method of claim 10, further comprising:
receiving a message identifying a second data function to be used by the publish-subscribe client (210) for the publish-subscribe data session (221-D); and
sending, toward the second data function, a request to establish the publish-subscribe data session (221-D) between the publish-subscribe client (210) and the second data function.

12. The method of claim 11, wherein the message identifying the second data function is received via the publish-subscribe control session (221-C).

13. The method of claim 11, wherein the message identifying the second data function is received via the publish-subscribe data session (221-D).

14. A computer program product storing instructions thereon, the instructions, when executed by an apparatus (1600), causes the apparatus to perform the method according to any of claims 10-13.
